# EUROPÄISCHE PATENTANMELDUNG

(11) **EP 2 462 805 A1**
(43) Veröffentlichungstag der Anmeldung: **13.06.2012**
(21) Anmeldenummer: 10015518.3
(22) Anmeldetag: 10.12.2010
(51) Int. Cl.: A01N 25/08, A01N 25/22, A01N 25/28, A01N 47/12, A01P 1/00

(54) **Formulierungen enthaltend stabilisierte iodhaltige Verbindungen**

(71) Anmelder: LANXESS Deutschland GmbH, 51369 Leverkusen (DE)
(72) Erfinder: Böttcher, Andreas, Dr., 50859 Köln (DE); Uhr, Hermann, Dr., 51373 Leverkusen (DE); Spetmann, Peter, 51377 Leverkusen (DE)

(57) **Zusammenfassung**

Die Erfindung betrifft Mittel enthaltend a) Mikrokapseln enthaltend zumindest ein iodhaltiges Biozid sowie b) zumindest ein Stickstoff enthaltendes anorganisches Trägermaterial, ein Verfahren zur Herstellung der erfindungsgemäßen Mittel sowie die Verwendung der vorgenannten Mittel zum Schutz technischer Materialien wie insbesondere Anstrichmitteln und die geschützten technischen Materialien selbst.

## Beschreibung

Die Erfindung betrifft Mittel enthaltend a) Mikrokapseln enthaltend zumindest ein iodhaltiges Biozid sowie b) zumindest ein Stickstoff enthaltendes anorganisches Trägermaterial, ein Verfahren zur Herstellung der erfindungsgemäßen Mittel sowie die Verwendung der vorgenannten Mittel zum Schutz technischer Materialien wie insbesondere Anstrichmitteln und die geschützten technischen Materialien selbst.

Iodhaltige Biozide finden zum Schutz technischer Materialien wie beispielsweise Anstrichmitteln zur Vermeidung von Befall, Zersetzung und optischer Veränderung durch Pilze, Bakterien und Algen breite Anwendung. Darüber hinaus werden iodhaltige Biozide, auch in Kombination mit Bioziden anderer Wirkstoffklassen als Komponente biozider Mischungen zum Beispiel in Holzschutzmitteln eingesetzt.

Den iodhaltigen Bioziden ist gemeinsam, dass sie unter Lichteinwirkung selbst in Substanz oder in Lösungen oder Mischungen zersetzt werden, was typischerweise zu einer Gelbfärbung und Wirkungsminderung oder sogar Wirkungsverlust führt.

Diese Eigenschaften erschweren oder verhindern den Einsatz von iodhaltigen Bioziden in Anwendungsgebieten, bei denen eine hohe Farbstabilität Voraussetzung für Vermarkbarkeit ist, wie zum Beispiel in hellen, beziehungsweise weißen Anstrichmitteln, siehe dazu auch WO 00/16628 A.

Weiterhin werden viele iodhaltige Biozide, insbesondere Iodalkinylverbindungen durch Metallverbindungen besonders rasch zersetzt und damit wirkungslos. Diese Eigenschaft verhindert ihren Einsatz in auf organischen Lösungsmitteln basierenden Anstrichmitteln, da diese typischerweise mit Übergangsmetallverbindungen wie Cobalt-, Blei-, Mangan- und VanadiumVerbindungen als Sikkative ausgerüstet sind, um eine schnelle Trocknung sicherzustellen.

Unter Anstrichmitteln sind im Rahmen der Erfindung Schutz-, Beschichtungs- und Anstrichmittel, wie beispielsweise Farben, Lacken und Lasuren, Grundierungen und Imprägnierungen umfasst.

Weiterhin können die vorgenannten Mittel Übergangsmetallverbindungen enthalten, die als farbgebende Pigmente fungieren und zum Teil eine vergleichbare zersetzende Wirkung auf die iodhaltigen Biozide ausüben.

Neben den Sikkativen und Pigmenten werden typischerweise zur Herstellung vorgenannter Mittel eine Reihe weiterer Bestandteile wie Prozessadditive, Weichmacher, Antiabsetzmittel, Thixotropiermittel, Korrosionsinhibitoren, Hautverhinderer und Binder eingesetzt, die in unterschiedlicher Intensität zu einer Zersetzung iodhaltiger Biozide führen können.

Neben den auf organischen Lösungsmitteln basierenden Schutz-, Beschichtungs- und Anstrichmitteln ist auch der Einsatz von iodhaltigen Bioziden in bestimmten auf Wasser basierenden Mitteln problematisch. Basiert beispielsweise die Filmbildung und Filmhärtung eines Wasser basierten Anstrichmittels auf der oxidativen Vernetzung wasserlöslicher oder dispergierter Alkydharze, so kommen auch in diesen Systemen Übergangsmetallverbindungen als Sikkative zum Einsatz, womit eine Zersetzung der enthaltenen iodhaltigen Biozide einhergeht.

Es sind aus dem Stand der Technik Methoden und Mittel bekannt, den Abbau von iodhaltigen Bioziden in Übergangsmetallverbindungen enthaltenden auf organischen Lösungsmittel basierenden Alkydharzfarben zu verhindern.

So beschreibt beispielsweise die WO 98/22543 A den Zusatz von Chelatisierungsreagenzien, die Patentschriften WO 00/16628 A, US 4,276,211 und US 4,297,258 den Zusatz von organischen Epoxiden.

Aus EP 083 308 A ist bekannt, die durch Licht induzierte Zersetzung von Iodpropargylbutylcarbamat, durch Zusatz von Tetraalkylpiperidinverbindungen oder UV-Absorbern zu unterdrücken.

Gemäß WO 2007/028527 A werden iodhaltige Biozide mit 2-(2-Hydroxyphenyl)-benzotriazolen stabilisiert.

Des Weiteren sind auch synergistische Mischungen von Epoxiden und UV Absorbern (siehe WO 99/29176 A) oder Benzyliden-Campher-Derivaten (US 6,472,424) beschrieben worden, die zu einer reduzierten Gelbfärbung führen sollen.

Darüber hinaus wird in WO 2007/101549 A die Stabilisierung iodhaltiger Biozide durch Azolverbindungen beschrieben, in WO 2010/112387 A die Stabilisierung iodhaltiger Biozide durch Aziridine.

Die Wirkung der oben genannten Stabilisatoren ist jedoch nicht immer ausreichend und mit anwendungstechnischen Nachteilen behaftet. So werden insbesondere die Trockenzeiten von Anstrichmitteln oftmals deutlich verlängert, was in vielen Fällen für den Anwender nicht akzeptabel ist. Weiterhin ist die Inhibierung der Verfärbung nicht immer ausreichend.

Es bestand daher die Aufgabe Mittel bereitzustellen, die die hervorragende biozide Wirkung von iodhaltigen Bioziden besitzen und trotzdem gute Anwendungseigenschaften wie schnelle Trocknungszeiten und Farbstabilität aufweisen.

Es wurden nun Mittel gefunden, die diese Anforderungen erfüllen.

Diese erfindungsgemäßen Mittel enthalten
- Mikrokapseln enthaltend zumindest ein iodhaltiges Biozid
- zumindest ein Stickstoff enthaltendes anorganisches Trägermaterial
- gegebenenfalls, aber vorzugsweise zumindest ein unpolares Lösungsmittel

Der Rahmen der Erfindung umfasst die vor- und nachstehend aufgeführten, allgemeinen oder in Vorzugsbereichen aufgeführten Restedefinitionen bzw. Parameter auch in beliebiger Kombination untereinander.

### Die Mikrokapseln

Die erfindungsgemäßen Mittel enthalten Mikrokapseln enthaltend zumindest ein iodhaltiges Biozid. Im Rahmen der Erfindung sind unter Mikrokapseln Partikel mit einer Teilchengröße von 100 nm bis 500 µm zu verstehen, in denen zumindest ein iodhaltiges Biozid von einem Kapselmaterial umhüllt ist. Erfindungsgemäß enthalten die Mittel vorzugsweise Mikrokapseln mit einem gewichtsmittleren Teilchendurchmesser von 1 µm bis 100 µm, besonders bevorzugt 2 µm bis 75 µm.

Der Gehalt der Mikrokapseln enthaltend zumindest ein iodhaltiges Biozid an zumindest einem iodhaltigen Biozid liegt beispielsweise bei 1 bis 90 Gew.%, vorzugsweise bei 20 bis 85 Gew.%.

Unter iodhaltigen Bioziden sind Verbindungen zu verstehen, die ein oder mehrere Iodatome tragen und eine biozide Wirkung aufweisen.

Bevorzugte iodhaltige Biozide sind beispielsweise solche, die ausgewählt sind aus der Gruppe bestehend aus: Diiodmethyl-p-tolylsulfon, Diiodmethyl-p-chlorphenylsulfon, 3-Brom-2,3-diiod-2-propenylalkohol, 2,3,3-Triiodallylalkohol, 4-Chlor-2-(2-chlor-2-methylpropyl)-5-[(6-iod-3-pyridinyl)methoxy]-3(2H)- pyridazinone (CAS-RN: 120955-77-3) Iodfenfos, 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinylalkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod- 2-propenylethylcarbamat, 3-Iod-2-propinyl-n-hexylcarbamat und 3-Iod-2-propinyl-cyclohexylcarbamat.

Besonders bevorzugte iodhaltige Biozide sind beispielsweise solche, die ausgewählt sind aus der Gruppe bestehend aus 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat.

Ganz besonders bevorzugte iodhaltige Biozide sind beispielsweise solche, die ausgewählt sind aus der Gruppe bestehend aus 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat.

Weitere iodhaltige Biozide sind beispielsweise Verbindungen der Formel (I) 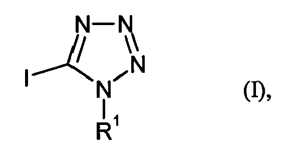 in welcher
R¹ für unsubstituiertes oder substituiertes Alkyl, Alkenyl, Alkinyl oder Phenyl steht,
wobei als Verbindungen der Formel (I) solche bevorzugt sind bei denen
R¹ für geradkettiges oder verzweigtes, unsubstituiertes oder ein- oder mehrfach gleich oder verschieden substituiertes C₁-C₈-Alkyl, für geradkettiges oder verzweigtes, unsubstituiertes oder ein- oder mehrfach gleich oder verschieden substituiertes C₂-C₈-Alkenyl oder für geradkettiges oder verzweigtes, unsubstituiertes oder ein- oder mehrfach gleich oder verschieden substituiertes C₂-C₈-Alkinyl steht,
   wobei die Substituenten für die ein- oder mehrfach gleich oder verschieden substituierten Alkyl-, Alkenyl- und Alkinylreste ausgewählt sind aus der Reihe Halogen; Nitro; Cyano; Hydroxy; unsubstituiertes C₁-C₆-Alkoxy; C₁-C₆-Alkoxy welches einfach oder mehrfach wie zum Beispiel vollständig gleich oder verschieden durch Halogen substituiert ist; unsubstituiertes C₁-C₆-Alkylthio; C₁-C₆-Alkylthio einfach oder mehrfach wie zum Beispiel vollständig, gleich oder verschiedenen durch Halogen substituiert ist; Amino; Monoalkylamino mit geradkettigen oder verzweigten C₁-C₆-Alkylresten; Dialkylamino mit gleichen oder verschiedenen, geradkettigen oder verzweigten C₁-C₆- Alkylresten; unsubstituiertes Phenyl; Phenyl welches einfach oder mehrfach, gleich oder verschieden substituiert ist durch Halogen, Nitro, Cyano, Alkyl, Halogenalkyl, Alkoxy, Halogenalkoxy, Alkylthio, Halogenalkylthio, Acyl, Acyloxy, Alkoxy-carbonyl, Carboxyl, Amino, Monoalkylamino oder Dialkylamino;
   oder
R¹ für unsubstituiertes Phenyl oder für Phenyl steht, welches einfach oder mehrfach, gleich oder verschieden substituiert ist durch Halogen, Nitro, Cyano, Hydroxy, Alkyl, Halogenalkyl, Alkoxy, Halogenalkoxy, Alkylthio, Halogenalkylthio, Acyl, Acyloxy, Alkoxycarbonyl, Carboxyl, Amino, Monoalkylamino oder Dialkylamino.

Die erfindungsgemäß in den Mitteln vorhandenen Mikrokapseln enthalten zumindest eins, bevorzugt ein oder zwei, ganz besonders bevorzugt ein iodhaltiges Biozid. Weiterhin können in den erfindungsgemäßen Mitteln unterschiedliche Mikrokapseln vorhanden sein, die sich bezüglich der ein oder mehreren darin vorhandenen iodhaltigen Biozide unterscheiden.

Ein ganz besonders bevorzugtes iodhaltiges Biozid ist IPBC. Ganz besonders bevorzugte Mikrokapseln sind solche, die IPBC und ansonsten keine weiteren iodhaltigen Biozide enthalten, noch weiter bevorzugte Mikrokapseln sind solche, die neben dem Kapselmaterial ausschließlich IPBC als Biozid enthalten.

Als Kapselmaterialien eignen sich natürliche, halbsynthetische und synthetische Kapselmaterialien.

Geeignete natürliche Kapselmaterialien sind beispielsweise Gummi arabicum, Agar, Agarose, Maltodextrin, Matriumalginat, Calciumalginat, Dextran, Fette, Fettsaeuren, Cetylalkohol, Milchfeststoffe, Molassen, Gelatine, Gluten, Albumin, Schellack, Staerken, Caseinate, Stearine, Saccharose sowie Wachse, wie Bienenwachs, Carnau-bawachs und Spermacetiwachs.

Geeignete halbsynthetische Kapselmaterialien sind beispielsweise Celluloseacetat, Celluloseacetatbutyrat, Cellulose-acetatphthalat, Cellulosenitrat, Ethylcellulose, Hydroxypropylcellulose, Hydroxypropylmethylcellulose, Hydroxy-propylmethylcellulosephthalat, Methylcellulose, Natrium-carboxymethylcellulose, hydrierter Talg, Myristylalcohol, Glycerin mono-oder-dipalmitat, hydriertes Ricinusoel, Glycerylmono-oder-tristearate und 12-Hydroxystearylalkohol.

Geeignete synthetische Kapselmaterialien sind beispielsweise Formaldehyd-Melamin-Harze, Acrylpolymere und-copoly-mere, wie Polyacrylamid, Polyalkylcyanoacrylat, und Poly-(ethylenvinylacetat), Aluminiummonostearat, Carboxyvinyl-polymere, Polyamide, Poly-(methylvinylether-maleinsaeurean-hydrid), Poly-(adipyl-L-lysin), Polycarbonate, Polyterephthalamid, Poly-(vinylacetatphthalat), Poly-(terephthaloyl-L-lysin), Polyarylsulfone, Poly-(methylmethacrylat), Poly-(s-caprolacton), Polyvinylpyrrolidon, Polydiraethylsiloxan, Polyester, Polyglykolsaeure, Poly-milchsaeure und deren Copolymere, Polyglutaminsaeure, Polylysin, Polystyrol, Poly-(styrol-acrylnitril), Polyvinylalkohol, Polyharnstoffe und Polyurethane sowie gemischete Polyharnstoff-polyurethanverbindungen.

Besonders bevorzugte Kapselmaterialien sind ausgewählt aus der Gruppe der Polyharnstoffe, Polyurethane und gemischten Polyharnstoff-polyurethanverbindungen, wobei solche Polyharnstoffe und Polyurethane sowie gemischete Polyharnstoff-polyurethanverbindungen ganz besonders bevorzugt sind, die Reaktionsprodukte von
- mindestens einer Verbindung ausgewählt aus der Gruppe der Polyamine, Polyole und Aminoalkohole mit
- mindestens einem Polyisocyanat sind.

Unter Polyolen sind im Rahmen der Erfindung Verbindungen zu verstehen, die zumindest zwei Hydroxygruppen aufweisen, die jeweils an einem sp³-hybridisierten Kohlenstoffatom gebunden sind.

Bevorzugte Polyole sind Glycerin, Pentaerythrit, Trimethylolethan, Trimethylolpropan und Ethandiol, 1,2-Propandiol, 1,3-Propandiol, 1,2-, 1,3- oder 1,4-Butandiol, Diethylenglycol und Neopentylglycol.

Unter Polyaminen sind im Rahmen der Erfindung Verbindungen zu verstehen, die zumindest zwei primäre oder sekundäre Aminogruppen aufweisen, die jeweils an ein, oder im Falle sekundärer Aminogruppen an zwei, sp³-hybridisierte Kohlenstoffatome gebunden sind.

Bevorzugte Polyamine sind Diaminoethan, Diaminopropan, Diaminobutan, Diaminopentan, Diaminohexan jeweils alle Isomere, 1,2-Diaminocyclohexan, 4,4'-Diethylentriamin, Hexamethylendiamin, Isophorondiamin, Triethylentetramin und Trimethylhexamethylendiamin, Guanidine. Die Polyamine können je nach Reaktivität auch als Salze, wie Hydrochloride, Sulfate oder Carbonate eingesetzt werden.

Unter Aminoalkoholen sind im Rahmen der Erfindung Verbindungen zu verstehen, die zumindest eine Hydroxygruppe und zumindest eine primäre oder sekundäre Aminogruppe aufweisen, wobei die Hydroxygruppen und Aminogruppen jeweils an ein sp³-hybridisiertes Kohlenstoffatom gebunden sind.

Bevorzugte Aminalkohole sind Ethanolamin und Triethanolamin.

Unter Polyisocanaten sind im Rahmen der Erfindung Verbindungen zu verstehen, die zumindest zwei Isocyanatogruppen (-NCO) aufweisen, die jeweils an ein sp²- oder sp³-hybridisiertes Kohlenstoffatom gebunden sind.

Bevorzugte Polyisocanate sind aliphatische Polyisocyanate wie Hexamethylendiisocyanat (HDI), HDI Trimer, HDI-Allophanat, HDI Uretdion, Isophorondiisocyanat (IPDI), 1,4-Cyclohexyldiisocyanat (CHDI), oder aromatische Polyisocyanate wie Toluylendiisocyanat (TDI), Diphenylmethandiisocyanat (MDI), oder polymeres Diphenylmethandiisocyanat (PMDI).

Für die Herstellung der vorgenannten Mikrokapseln sind zahlreiche Verfahren bekannt (siehe beispielsweise CA. Finch, R. Bodmeier, Micro-encapsulation, Ullmann's Encyclopedia of Industrial Chemistry, 6. Auflage 2001, Electronic Release).

Der Fachkann kann durch wenige Versuche in Abhängigkeit vom einzusetzenden iodhaltigen Biozid und dem einzusetzenden Kapselmaterial jeweils ein geeignetes Verfahren auswählen.

Die mit Polyurethanen verkapselten iodhaltigen Biozide können beispielsweise auch in an sich bekannter Weise analog zu den in US 2006/0251688, US 2007/0053950 und Abstract Postersession P 29, XVth International Conference on Bioencapsulation, Dublin, Ireland Sept. 4-8, 2008 genannten Methoden erhalten werden. Hierbei werden die iodhaltigen Biozide in einem aliphatischen Kohlenwasserstoff dispergiert, welcher ein amphoteres Tensid enthält, wobei dann Polyole in Gegenwart von Katalysator mit Polyisocyanat vernetzt werden.

In einer bevorzugten, bislang unbekannten und daher von der Erfindung ebenfalls umfassten Ausführungsform können iodhaltige Biozide, insbesondere feste iodhaltige Biozide wie beispielsweise IPBC, vorteilhaft so in Mikrokapseln eingebracht werden, dass man
a) eine Dispersion zumindest eines iodhaltiges Biozides und zumindest eines Alkydharzes in einem unpolaren Lösungsmittel mit einer Emulsion enthaltend ein unpolares Lösungsmittel und zumindest eine Verbindung ausgewählt aus der Gruppe Polyol, Polyamin und Aminoalkohole versetzt,
b) und die gemäß Schritt a) resultierende Mischung in Gegenwart von Katalysator mit zumindest einem Polyisocyanat umsetzt.

Die Umsetzung gemäß Schritt a) erfolgt vorzugsweise in Gegenwart zumindest eines Tensids, besonders bevorzugt enthält die Emulsion zumindest ein Tensid.

Auf erfindungsgemäße Weise erhält man unmittelbar eine Dispersion von Mikrokapseln enthaltend zumindest ein iodhaltiges Biozid.

Unter Alkydharzen sind im Rahmen der Erfindung Polyester zu verstehen, die zu mindestens 80 Gew.-%, vorzugsweise zu mindestens 90 Gew.% aus Struktureinheiten bestehen die sich von
- Polyolen und
- mehrwertigen Carbonsäuren und
- gesättigten oder ungesättigten, vorzugsweise ungesättigten C₈ bis C₂₄-Monocarbonsäuren ableiten.

Die Alkydharze haben vorzugsweise eine Molmasse von 500 bis 100,000 g/mol, besonders bevorzugt von 1,000 bis 50,000 g/mol, insbesondere von 1,500 bis 20,000 g/mol (bestimmt durch Laserlicht-Streuung, siehe bspw. "Static Light Scattering of Polystyrene Reference Materials: Round Robin Test", U. Just, B. Werthmann International Journal of Polymer Analysis and Characterization, 1999 Vol.5, Seiten 195 - 207).

Bevorzugte Polyole sind auch hier Glycerin, Pentaerythrit, Trimethylolethan, Trimethylolpropan und Ethandiol, 1,2-Propandiol, 1,3-Propandiol, 1,2-, 1,3- oder 1,4-Butandiol, Diethylenglycol und Neopentylglycol.

Bevorzugte mehrwertige Carbonsäuren sind Phthalsäure, Maleinsäure, Isophthalsäure, Terephthalsäure, Trimellithsäure, Adipinsäure, Azelainsäure oder Sebacainsäure, wobei zur Herstellung der Alkydharze selbstverständlich auch die Anhydride der vorgenannten Säuren eingesetzt werden.

Bevorzugte C₈ bis C₂₄-Monocarbonsäuren sind solche, die in Leinöl, Oiticiaöl, Holzöl, Sojaöl, Sonnenblumenöl, Distelöl, Ricinusöl, Tallöl, Kokosöl, Erdnussöl als Glycerinester enthalten sind.

In einer Ausführungsform können die Alkydharze gegebenenfalls noch modifiziert sein mit Naturharzen, Phenolharzen, Acrylharzen, Styrol, Epoxidharzen, Siliconharzen, Isocyanaten, Polyamiden, Polycarbamaten oder Aluminiumalkoholaten.

In einer weiteren Ausführungsform sind die Alkydharze thixotropiert, d.h. entweder mit einem Thixotropiermittel behandelt oder chemisch so modifiziert, dass sie thixotrope Eigenschaften aufweisen. Solche thixotropierten Alkydharze sind beispielsweise von der Firma Worlée erhältlich.

Bei den in das erfindungsgemäße Verfahren einzusetzenden unpolaren Lösungsmitteln handelt es sich um organische Lösungsmittel mit einer Dielektrizitätskonstante von weniger als 5,00 bei 25°C, in denen das eingesetzte iodhaltige Bozid nicht oder nur geringfügig, d.h. bis maximal zu 2 Gew.%, vorzugsweise zu maximal 0,5 Gew.% löslich ist. Solche Lösungsmittel sind beispielsweise und vorzugsweise Kohlenwasserstoffe wie beispielsweise aliphatische, alicyclische oder aromatische Kohlenwasserstoffe, wie beispielsweise Benzinfraktionen, Benzol, Toluol, Xylol, verschiedene Petrolether, Hexan, Cyclohexan, Mineralöle, Paraffinöle, wie z.B. Isoparaffine, hocharomatisches Petroleum wie Naphta, aber auch andere Petroleumfraktionen oder Mischungen der vorgenannten Lösungsmittel.

Die Dispersionen können nach Standardverfahren hergestellt werden, beispielsweise mittels geeigneter Dispergiervorrichtungen, aber auch durch Mahlung der Mischung aus Wirkstoff, Kohlenwasserstoff und Alkydharz mittels geeigneter Mühlen.

Die Gehalte der Dispersionen an iodhaltigen Bioziden, Alkydharzen und unpolaren Lösungsmitteln können erfindungsgemäß in einem breiten Bereich variiert werden. Im Allgemeinen enthalten die Dispersionen 2 bis 80 Gew.-% zumindest eines iodhaltigen Biozids, 10 bis 80 Gew.-% des unpolaren Lösungsmittels und 2 bis 40 Gew.-% an Alkydharz, wobei die Summe der drei vorgenannten Komponenten 90 bis 100 Gew.%, vorzugsweise 95 bis 100 Gew.-% der gesamten Dispersion beträgt. Bevorzugt enthalten die Dispersionen 5 bis 70 Gew.% zumindest eines iodhaltigen Biozids, 20 bis 60 Gew.% des unpolaren Lösungsmittels und 4 bis 30 Gew.% an Alkydharz, wobei die Summe der drei vorgenannten Komponenten 90 bis 100 Gew.-%, vorzugsweise 95 bis 100 Gew.% der gesamten Dispersion beträgt.

Die Dispersionen können nach Standardverfahren hergestellt werden, beispielsweise mittels geeigneter Dispersionswerkzeuge, aber auch durch Mahlung der Mischung aus Wirkstoff, Kohlenwasserstoff und Harz mittels geeigneter Mühlen.

Die erfindungsgemäß einzusetzende Emulsion enthaltend ein unpolares Lösungsmittel und zumindest eine Verbindung ausgewählt aus der Gruppe Polyol, Polyamin und Aminoalkohole.

Die unpolaren Lösungsmittel sind ausgewählt aus der gleichen Gruppe die oben für die Dispersionen bereits beschrieben wurden, worzugsweise wird für die Dispersionen und die Emulsionen das gleiche unpolare Lösungsmittel verwendet.

Als Polyole werden in das erfindungsgemäße Verfahren beispielsweise solche eingesetzt, wie sie bereits oben beschrieben worden sind, wobei es bevorzugt ist, Mischungen von Polyolen einzusetzen, die neben Diolen, d.h. Verbindungen, die zwei Hydroxygruppen an jeweils einem sp³-hybridisierten Kohlenstoffatom tragen, zumindest 5 Mol-% an Polyolen enthalten, die mindestens drei Hydroxygruppen an jeweils einem sp³-hybridisierten Kohlenstoffatom tragen.

Als Polyamine werden in das erfindungsgemäße Verfahren beispielsweise solche eingesetzt, wie sie bereits oben beschrieben worden sind.

Vorzugsweise wird das unpolare Lösungsmittel für die Dispersion und Emulsion oder das oder die Polyamine so gewählt, dass das oder die Polyamine nicht oder nur geringfügig, d.h. bis maximal zu 2 Gew.%, vorzugsweise zu maximal 0,5 Gew.% im unpolaren Lösungsmittel löslich sind.

Vorzugsweise werden in Schritt a) die Dispersionen mit den Emulsionen in Gegenwart zumindest eines Tensids versetzt, bzw. enthalten besonders bevorzugt die Emulsionen zumindest ein Tensid.

Tenside sind beispielsweise anionische, kationische oder amphotere Tenside.

Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium-, Kalium-, Magnesium-, Calcium-, sowie Ammonium- und Triethanolamin-Salze.

Amphotere Tenside sind beispielsweise Alkylarylpolyglycolether, wie Polyoxyethylenoctylphenolether, ethoxyliertes Isooctyl-, Octyl-oder Nonylphenol, Alkylphenol- oder Tributylphenylpolyglycolether, Tris-sterylphenyletherethoxylate, Alkylarylpolyetheralkohole, Isotridecylalkohol, Polyoxyethylen-Fettalkoholether" Polyoxyethylen-Fettsäureester wie z.B. ethoxyliertes Rizinusöl, Polyoxyethylenalkylether oder Polyoxypropylen, Laurylalkoholpolyglycoletheracetat, Sorbitester oder Blockcopolymere auf Basis von Ethylen- und/oder Propylenoxid.

Gemäß Schritt b) werden die gemäß Schritt a) erhältlichen Mischungen und die gemäß Schritt a) resultierende Mischung in Gegenwart von Katalysator mit zumindest einem Polyisocyanat umgesetzt.

Als Katalysatoren können prinzipiell alle Katalysatoren verwendet werden, die die Reaktion von Isocyanaten mit Alkoholen oder Aminen beschleunigen. Als Katalysatoren können dabei alle üblichen Urethanisierungskatalysatoren vom Organozinn-Typ verwendet werden, wie beispielsweise Dibutylzinndilaurat, Dibutylzinndiacetat, Dibutylzinndialkylmaleate, Zinnstearat und Zinnoctylat.

Des weiteren können als Katalysatoren tertiäre Amine eingesetzt werden, wie beispielsweise Triethylendiamin, 2-Methyltriethylendiamin, N,N-Dimethylaminoethylmorpholin, 1-Isobutyl-2-methylimidazol, 1,8-Diazabicyclo[5,4,0]undecen-7 und 1,5-Diazabicyclo[4,3,0]- nonen-5; und Katalysatoren vom Metallsalz-Typ aus organischer Säure, wie Cobaltnaphthenat, Tetra(2-ethylhexyl)titanat, Eisen(III)-2-ethylhexoat, Cobalt-2-ethylhexoat und Zinknaphthenat.

Als Polyisocyanate werden in das erfindungsgemäße Verfahren beispielsweise solche eingesetzt, wie sie bereits oben beschrieben worden sind.

Die Polyisocyanate können im Schritt b) entweder als Lösung oder in Substanz zugegeben werden. Gibt man sie als Lösung zu, verwendet man bevorzugt die bereits für die Dispersionen und oder Emulsionen verwendeten unpolaren Lösungsmittel. Die Temperatur kann in einem relativ breiten Bereich variiert werden und hängt von der Reaktivität der Polyisocyanate, Polyole, Polyamine bzw. Aminoalkohole ab. Im Allgemeinen wird die Reaktion bei einer Temperatur von 10 bis 70 °C, bevorzugt bei 20 bis 60°C durchgeführt.

Um die Eigenschaften der Produkte zu modifizieren, können gegebenenfalls noch weitere Verkapselungsschichten analog aufgebracht werden

Die erfindungsgemäß erhältlichen Suspensionen weisen eine überraschend hohe Sedimentations- und Lagerstabilität auf.

### Die Stickstoff enthaltenden anorganischen Trägermaterialien

Die erfindungsgemäßen Mittel enthalten weiterhin zumindest ein Stickstoff enthaltendes anorganisches Trägermaterial, vorzugsweise eines, zwei oder drei, besonders bevorzugt ein Stickstoff enthaltendes anorganisches Trägermaterial.

Unter Stickstoff enthaltenden anorganischen Trägermaterialien sind im Rahmen der Erfindung anorganische Trägermaterialien zu verstehen, die entweder durch Adsorption zumindest einer Stickstoff enthaltenden Verbindung oder durch kovalente Anbindung einer Stickstoff enthaltenden Verbindung modifiziert wurden oder die durch Adsorption zumindest einer Stickstoff enthaltenden Verbindung und durch kovalente Anbindung einer Stickstoff enthaltenden Verbindung modifiziert wurden.

In einer bevorzugten Ausführungsform enthalten die Stickstoff enthaltenden, anorganischen Trägermaterialien den Stickstoff in organisch gebundener Form, wobei im Sinne der Erfindung unter organisch gebundenem Stickstoff, Stickstoff zu verstehen ist, der zumindest eine Bindung zu einem Kohlenstoff-Atom aufweist, wobei Cyanid- und Isocyanat-ionen bzw. Blausäure und Isocyansäure ausgenommen sind.

Die erfindungsgemäßen Stickstoff enthaltenden, anorganischen Trägermaterialien sind vorzugsweise bei Raumtemperatur fest.

Die erfindungsgemäßen Stickstoff enthaltenden anorganischen Trägermaterialien werden vorzugsweise durch Umsetzung von anorganischen Trägermaterialien mit zumindest einer Stickstoff enthaltenden Verbindungen hergestellt, wobei die Stickstoff enthaltenden Verbindungen vorzugsweise organische Verbindungen sind.

In einer bevorzugten Ausführungsform weisen erfindungsgemäßen, Stickstoff enthaltenden anorganischen Trägermaterialien einen Stickstoffgehalt von 0,05 bis 10 Gew.%, vorzugsweise von 0,1 bis 10 Gew.% auf. Sofern nicht anders angegeben wurden und werden Stickstoffgehalte durch Elementaranalyse mittels Verbrennungsmethode quantitativ bestimmt.

Da die Reaktionsmechanismen bei der Umsetzung von Stickstoff enthaltenden Verbindungen mit den anorganischen Trägermaterialien insbesondere in denjenigen Fällen, in denen auch kovalente Bindungen gebildet werden, häufig undurchsichtig, vielschichtig und strukturell nicht vollständig aufzuklären sind, sind unter dem Begriff Stickstoff enthaltende anorganische Trägermaterialien auch solche umfasst, die durch Umsetzung von anorganischen Trägermaterialien mit Stickstoff enthaltenden Verbindungen erhalten wurden, wobei die für Stickstoff enthaltende anorganischen Trägermaterialien im Allgemeinen und vorzugsweise genannten Bereiche in gleicher Weise gelten Geeignete anorganische Trägermaterialien sind beispielsweise und vorzugsweise Kieselsäuren wie beispielsweise Fällungskieselsäuren, wie Kieselgele, mesoporöse Silikate, Xerogele, Aerogele, pyrogene Kieselsäuren, mit anorganischen, organischen oder metallorganischen Resten modifizierte Kieselsäuren, bspw. mit Dichlordialkylsilanen modifizierte Kieselsäuren, Kieselgur, Porosile bspw. Zeosile, Clathrasile oder dealuminierte Zeolithe, Aluminosilikate, Zeolithe, natürliche oder synthetische Tektosilikate, natürliche Silikate wie bspw. Vermiculit, Glimmer oder pyrogene Metalloxide beispielsweise Titandioxide, berispielsweise in Anatas- oder Rutil-Modifikation, inklusive pyrogene Metallmischoxide.

Bevorzugt sind pyrogene Kieselsäuren, insbesondere hydrophile oder hydrophobe, beispielsweise die unter dem Namen Aerosil^{®} der Firma Evonik-Degussa im Handel sind, wobei das Produkt Aerosil^{®} 200 besonders bevorzugt ist.

Bevorzugt ist es auch, dass das anorganische Trägermaterial für den Fall, dass die heterocyclische 3-Ring-Verbindung ein Aziridin ist, kein Organoboran enthält.

Ebenfalls bevorzugt sind hydrophile oder hydrophobe Fällungskieselsäuren, insbesondere hydrophile oder hydrophobe, beispielsweise die unter dem Namen Sipernat^{®} der Firma Evonik-Degussa im Handel sind. Hierbei sind die Produkte Sipernat^{®}22S und Sipernat^{®}50S besonders bevorzugt.

Die in den erfindungsgemäßen Mitteln enthaltenen Stickstoff enthaltenden anorganischen Trägermaterialien haben vorzugsweise eine Teilchengröße von 0,001 bis 1000 µm, insbesondere von 0,005 bis 500 µm.

Bevorzugt zeichnen sich die Stickstoff enthaltenden anorganischen Trägermaterialien durch die Fähigkeit zur Absorption von Flüssigkeiten aus, gemessen an ihrem DBP-Absorptionsvermögen (DBP = Dibutylphtalat, siehe DIN 53601 bzw. ISO 4656) in Gramm pro 100g Trägermaterial. Bevorzugt liegt das DBP-Absorptionsvermögen der erfindungsgemäßen Trägermaterialien bei 0,1 bis 800g/100g, besonders bevorzugt bei 1 bis 500g/100g Trägermaterial.

Die in den erfindungsgemäßen Mitteln enthaltenen Stickstoff anorganischen Trägermaterialien besitzen bevorzugt eine spezifische Oberfläche [m²/g], bestimmt in Anlehnung an die Methode nach Brunauer, Emmett und Teller (BET-Oberfläche; J.Am.Chem.Soc. 60, 309 (1938)) nach ISO 5794/1 (Annex D) von 1 bis 1200 m²/g, besonders bevorzugt von 50 bis 900 m²/g.

Als Stickstoff enthaltende Verbindungen eignen sich beispielsweise solche, in denen der Stickstoff organisch gebunden ist.

Solche Verbindungern umfassen beispielsweise Monostickstoffverbindungen und Polystickstoffverbindungen:

Monostickstoffverbindungen sind beispielsweise solche der Formel (II)

R²R³ R⁴N (II)

in der
R², R³ und R⁴ jeweils unabhängig voneinander für Wasserstoff, Alkyl, Alkenyl oder Aryl stehen oder paarweise gemeinsam einen 3 bis 7 gliedrigen N-heterocyclischen, aliphatischen, ungesättigten oder aromatischen Ring bilden
   wobei die Reste Alkyl, Alkenyl oder Aryl oder die 3 bis 7 gliedrigen N-heterocyclischen, aliphatischen, ungesättigten oder aromatischen Ring entweder nicht, einfach oder mehrfach durch Reste substituiert sind die ausgewählt sind aus der Gruppe Hydroxy, Fluor, Chlor, Brom, Iod, Carboxyl, Alkylsulfonyl, Arylsulfonyl, Nitril oder Isonitril,
wobei jedoch zumindest einer der Reste R², R³ und R⁴ nicht Wasserstoff ist.

Verbindungen der Formel (II) sind beispielsweise Aminoethanol und (2-[(1-Methylpropyl)amino]ethanol.

Polystickstoffverbindungen sind beispielsweise Polyamine wie beispielsweise
- Aliphatische Diamine wie beispielsweise Ethylendiamin, 1,2- und 1,3-Propandiamin, 2-Methyl-1,2-propandiamin, 2,2-Dimethyl-1,3-propandiamin, 1,3- und 1,4-Butandiamin, 1,3-und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin,
- Cycloaliphatische Polyamine wie beispielsw1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, 2-Methylpentamethylendiamin, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2.6}]decan, 1,4-Diamino-2,2,6-trimethylcyclohexan (TMCDA), 3,9-Bis-(3-aminopropyl)-2,4,8,10-tetra-oxaspiro[5.5]undecan, Piperazin, 1-(2-Aminoethyl)piperazin,

- Aromatische Polyamine wie 1,3- und 1,4-Xylylendiamin;
- zwei- oder mehrwertige aliphatische Amine, welche neben einer oder mehreren primaeren Aminogruppen mehr als eine sekundaere Aminogruppe tragen, wie Diethylentriamin (DETA), Triethylentetramin (TETA), Tetraethylenpentamin (TEPA), Pentaethylenhexamin und hoehere Homologe linearer Polyethylenamine, N,N'-Bis-(3-aminopropyl)-ethylendiamin, Polyvinylamine, sowie Polyethylenimine unterschiedlichen Polymerisationsgrades (Molmassen-Bereich 500 bis 1'000'000 g/mol), wie sie beispielsweise unter dem Handelsnamen Lupasol^{®} von BASF in reiner Form oder als waessrige Loesungen erhaeltlich sind, wobei diese Polyethylenimine neben primaeren und sekundaeren auch tertiaere Aminogruppen enthalten;
- Polyamidoamine
- Ethergruppen-haltige aliphatische Polyamine wie Bis-(2-aminoethyl)-ether, 4,7-Dioxadecan-1,10-diamin, 4,9-Dioxadodecan-1,12-diamin und hoehere Oligomere davon, Polyoxyalkylen-Polyamine mit zwei oder drei Aminogruppen, beispielsweise erhaeltlich unter dem Namen Jeffamine® (von Huntsman Chemicals), unter dem Namen Polyetheramin (von BASF) oder unter dem Namen PC Amine^{®} (von Nitroil), sowie Mischungen der vorgenannten Polyamine.

Als besonders geeignete Stickstoff enthaltende Verbindungen seien Aziridine genannt.

Als Aziridine kommen solche in Frage, die eine oder mehrere Aziridin-Gruppen enthalten.

Bevorzugte Aziridine sind bspw. Aziridinverbindungen der Formel (III) 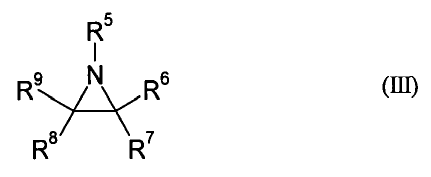 wobei
R⁵ Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl, Alkanoyl, Carbamoyl oder Oxomethylen bedeutet,
R⁶, R⁷, R⁸ und R⁹ unabhängig voneinander die gleiche Bedeutung wie R⁵ haben und zusätzlich unabhängig Halogen, Hydroxyl, Carboxyl, Alkylsulfonyl, Arylsulfonyl, Nitril, Isonitril bedeuten oder die Reste
R⁶ und R⁸ oder R⁷ und R⁹ gemeinsam mit den Kohlenstoffatomen, an die sie gebunden sind, einen 5- bis 10 gliedrigen carbocyclischen Ring bilden, der nicht weiter substituiert oder weiter substituiert und/oder einfach- oder mehrfach ethylenisch ungesättigt ist.

Als monofunktionelle Aziridine der Formel (III) kommen bspw. solche in Frage, worin R⁶ und R⁸ oder R⁷ und R⁹ gemeinsam mit den Kohlenstoffatomen, an die sie gebunden sind, einen 5- bis 10 gliedrigen carbocyclischen Ring bilden, der nicht weiter substituiert oder weiter substituiert und/oder einfach- oder mehrfach ethylenisch ungesättigt ist.

Insbesondere sind dies solche der Formel (IV) 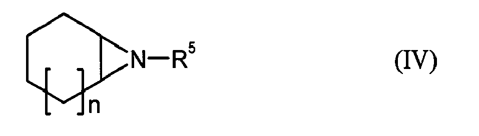 wobei der carbocyclische Ring unsubstituiert ist oder mit einem oder mehreren Substituenten ausgewählt aus der Reihe Halogen, Hydroxyl, Oxo, Carboxyl, Alkylsulfonyl, Arylsulfonyl, Nitril, Isonitril, Alkyl oder Cycloalkyl, die jeweils unsubstituiert oder substituiert und/oder einfach- oder mehrfach ethylenisch ungesättigt sind, substituiertes oder unsubstituiertes Fullerenyl, Aryl, Alkoxy, Alkoxycarbonyl oder Alkanoyl weiter substituiert ist und
n für eine Zahl von 0 bis 6, bevorzugt für 0 oder 1 steht.

Ebenfalls sind solche monofunktionelle Aziridinverbindungen der Formel (III) bevorzugt, worin R⁵ für einen Rest der Formel 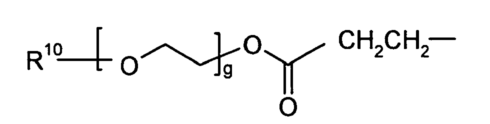 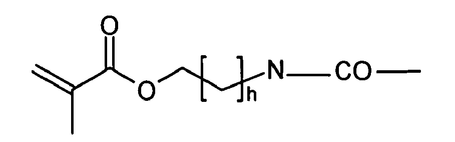 steht,
worin
R¹⁰ für-H oder Alkyl, bevorzugt für -H, -CH₃, -C₂H₅, besonders bevorzugt für -CH₃, -C₂H₅ steht,
g eine Zahl von 1 bis 4, bevorzugt 1 bis 3, besonders bevorzugt 1 oder 2 ist,
h eine Zahl von 1 bis 11, bevorzugt 1 bis 5 und besonders bevorzugt 1 bis 3 ist
und die übrigen Reste, die obige Bedeutung haben.

Insbesondere sind solche Verbindungen der Formel (III) bevorzugt, die der Verbindung der Formel (V) oder (VI) entsprechen. 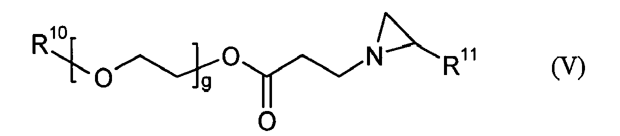 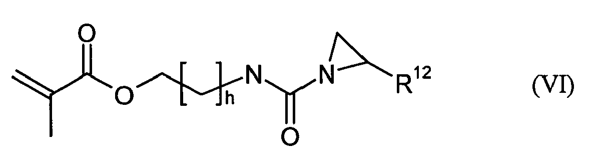 wobei
R¹¹ für -H oder Alkyl, bevorzugt für -H oder -CH₃, besonders bevorzugt für -CH₃ steht,
R¹² für -H oder Alkyl, bevorzugt für -H oder -CH₃, besonders bevorzugt für -CH₃ steht und die übrigen Reste die obige Bedeutung haben.

Besonders bevorzugt sind Aziridine, die zwei oder mehrere Aziridinfunktionen haben. Beispielsweise sind Verbindungen der Formel (VII) zu nennen. 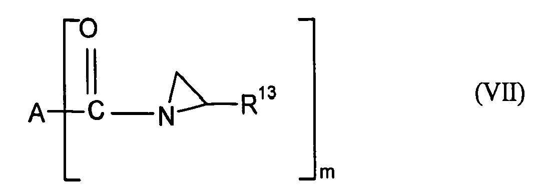 worin
A ein m-valenter aliphatischer, cycloaliphatischer oder aromatischer Rest bedeutet, der ggf. substituiert ist,
m für eine Zahl von 2 bis 5, insbesondere 2 oder 3 steht, und
R¹³ für jede m-Einheit jeweils unabhängig für Wasserstoff oder C₁-C₄-Alkyl, insbesondere CH₃ oder CH₂CH₃ steht.
Bei m = 2 steht A bevorzugt für C₂-C₁₀-Alkylen,

insbesondere für

-(CH₂)₆)-, -C(CH₃)₂ CH₂ C(CH₃)₂ CH₂- oder

- C(CH₃)₂ CH₂ CH(CH₃) CH₂ -

oder für ein Phenylen, insbesondere für den bivalenten Rest der Formel

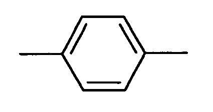

Bei m = 3 steht A bevorzugt für den trivalenten Rest der Formel

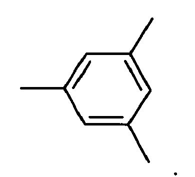

Bevorzugt sind solche Verbindungen der Formel (V), die den Formeln (VIII) - (XI) entsprechen.

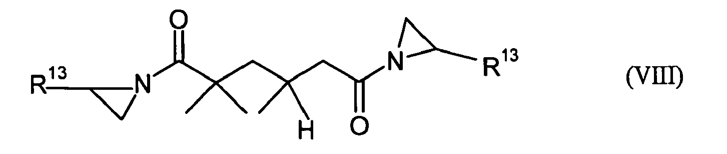

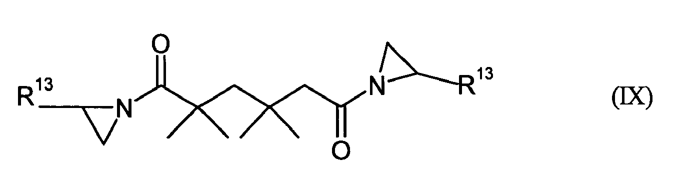

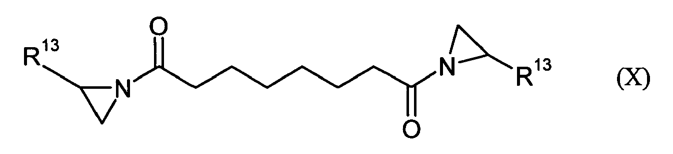

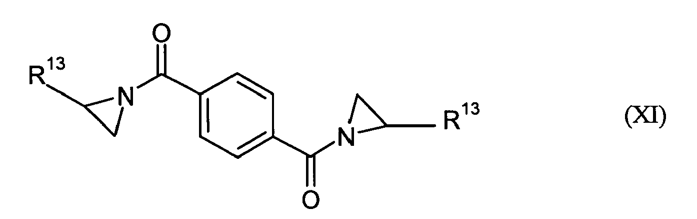

Ebenfalls bevorzugt sind als polyfunktionelle Aziridinverbindungen Michael-Additionsprodukte von gegebenenfalls substituiertem Ethylenimin an Ester von mehrwertigen Alkoholen mit α,β-ungesättigten Carbonsäuren und den Additionsprodukten von gegebenenfalls substituiertem Ethylenimin an Polyisocyanate.

Geeignete Alkoholkomponenten sind beispw. Trimethylolpropan, Neopentylglykol, Glycerin, Pentaerythrit, 4,4'-Isopropylidendiphenol, 4,4'-Methylendiphenol und Polyvinylalkohole. Als α,β-ungesättigte Carbonsäuren kommen bspw. Acryl- und Methacrylsäure, Crotonsäure und Zimtsäure in Frage. Besonders bevorzugt ist Acrylsäure. Die korrespondierenden mehrwertigen Alkohole der α,β-ungesättigten Carbonsäureester können ggf. Alkohole sein, die an ihren OH-Funktionen teilweise vollständig mit Alkylenoxiden einfach oder mehrfach verlängert sind. Hierbei kann es sich bspw. um die mit Alkylenoxiden einfach oder mehrfach verlängerten oben genannten Alkohole handeln. Diesbezüglich wird auch auf die US 4,605,698 verwiesen, dessen Offenbarung durch Bezugnahme in die vorliegende Erfindung eingeschlossen ist. Erfindungsgemäß besonders geeignete Alkylenoxide sind Ethylenoxid und Propylenoxid.

Beispiele für zur Reaktion mit gegebenenfalls substituiertem Ethylenimin geeigneten Polyisocyanaten sind die auf S. 4, Zeile 33 - 35 von WO2004/050617 A genannten.

Beispiele für erfindungsgemäß geeignete Aziridine sind die auf S. 3, Zeile 29 - 34 von WO2004/05061 A genannten.

Bevorzugt sind ebenfalls solche Aziridine wie sie beispielsweise in US 3,225,013 (Fram), US 4,490,505 (Pendergrass) und US 5,534,391 (Wang) beschrieben sind.

Ebenfalls bevorzugt sind solche Aziridine der Formel (III), die wenigsten drei Aziridingruppen besitzen, wie beispielsweise Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Tris(1-aziridinyl)phosphinoxid, Tris(2-methyl-1-aziridinyl)phosphinoxid, Pentaerythritol-tris-[3-(1-aziridinyl)propionat] und Pentaerythritol-tetrakis-[3-(1-aziridinyl)propionat].

Hiervon sind besonders Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Pentaerythritol-tris-[3-(1-aziridinyl)propionat] und Pentaerythritol-tetrakis-[3-(1-aziridinyl)propionat] bevorzugt.

Besonders sind Trimethylolpropan-tris[3-(1-aziridinyl)propionat], Trimethylolpropan-tris[3-(2-methyl-1-aziridinyl)propionat] und Pentaerythritol-tetrakis-[3-(1-aziridinyl)propionat] bevorzugt.

Ebenfalls bevorzugt sind polyfunktionelle Aziridine der Formel (XII) 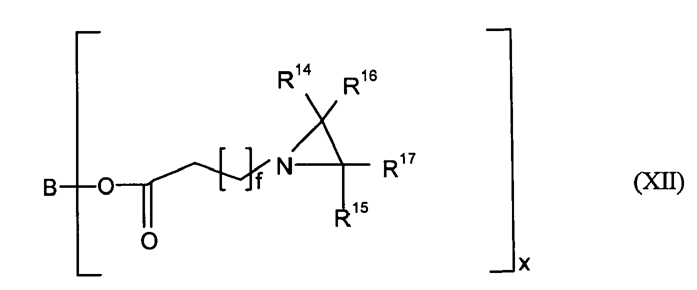 worin
B der Rest eines aliphatischen Polyols ist, das wenigstens x OH-Funktionen aufweist, wobei x OH-Funktionen durch den Rest der obigen Klammer substituiert sind,
f für eine Zahl von 0 bis 6, insbesondere von 1 bis 3 steht,
x eine Zahl größer oder gleich 2 ist, insbesondere für 2 bis 500.000 steht und
R¹⁴, R¹⁵, R¹⁶ und R¹⁷ jeweils unabhängig voneinander die identische Bedeutung wie die Reste R⁶ bis R⁹ in der Formel (II) haben.

Besonders bevorzugt sind solche Aziridine der Formel (VI), worin x für 3 oder 4 steht und B ein 3-oder 4-fach OH-funktionelles Polyol ist.

Besonders bevorzugt sind Aziridine der Formel (XII), die der Formel (XIII) - (XV) entsprechen 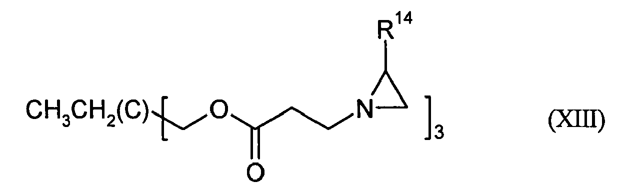 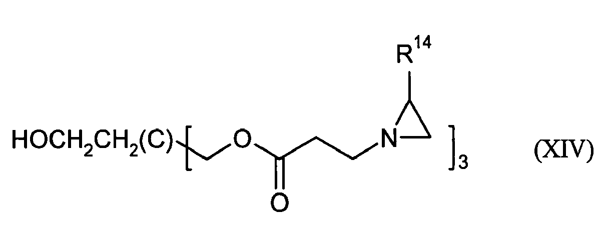 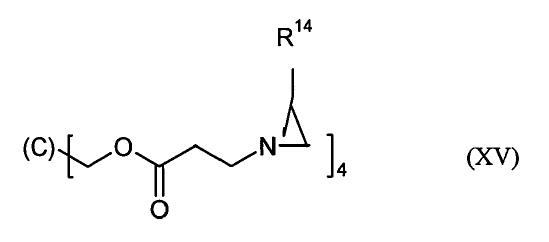 worin
R¹⁴ für Wasserstoff oder CH₃ steht.

Besonders bevorzugt ist die auch als Crosslinker CX-100 von DSM bekannte Aziridinverbindung der Formel (VIa), mit R¹⁴ = Methyl sowie auch das Produkt "Corial Härter AN" der BASF, das das Aziridin der Formel (VIa) mit R¹⁴ = Wasserstoff enthält.

Bevorzugtes "Alkyl" ist hier ein linearer oder verzweigter Alkylrest mit 1 bis 20, bevorzugt 1 bis 12 Kohlenstoffatomen. Beispiele für erfindungsgemäße Alkylreste sind Methyl, Ethyl, n-Propyl, Isopropyl, n-Butyl, Isobutyl, sec-Butyl, tert-Butyl, Pentyl, iso-Amyl, Hexyl, Octyl usw. Die vorgenannten Alkylreste können entweder nich oder einfach oder mehrfach durch folgende Reste substituiert sein; Alkoxy, bevorzugt C₁-C₁₂-Alkoxy, Nitro, Monoalkylamino, bevorzugt C₁-C₁₂-Monoalkylamino, Dialkylamino, bevorzugt Di[C₁-C₁₂-]alkylamino, Cyano, Halo, Haloalkyl, bevorzugt Trifluoromethyl, Alkanoyl, Aminocarbonyl, Monoalkylaminocarbonyl, Dialkylaminocarbonyl, Alkylamido, bevorzugt C₁-C₁₂-Alkylamido, Alkoxycarbonyl, bevorzugt C₁-C₁₂- Alkoxycarbonyl, Alkylcarbonyloxy, bevorzugt C₁-C₁₂-Alkylcarbonyloxy, Aryl, bevorzugt Phenyl oder durch Halogen, C₁-C₁₂-Alkyl oder C₁-C₁₂-Alkoxy substituiertes Aryl, heterocyclische 3-Ringgruppen, insbesondere Aziridin- oder Epxoygruppen, oder Substituenten, wie die oben genannten, die diese Gruppen enthalten.

Die erfindungsgemäßen, Stickstoff enthaltenden anorganischen Trägermaterialien können zudem weitere Verbindungen enthalten, beispielsweise Lösungsmittel wie bspw. Ester ein- oder mehrwertiger Carbonsäuren (z.B. Gemische enthaltend Diisobutyladipat, Diisobutylglutarat, Diisobutylsuccinat), bevorzugt VOC-freie bzw. VOC-arme Lösungsmittel, wobei unter VOC (volatile organic compounds) flüchtige organische Verbindungen mit einem Siedepunkt von kleiner 250°C verstanden werden, Emulgatoren wie bspw. Ricinusöl-Ethoxylate, Dispergierhilfsmittel wie bspw. Polyvinylalkohole, Chelatisierungsreagentien wie beispielsweise in WO 98/22543 A genannt, ein oder mehrere Stabilisatoren aus der Reihe der Antioxidantien, Radikalfänger, UV-Stabilisatoren und/oder UV-Absorber (Beispiele s. unten). In vielen Fällen werden hier synergistische Effekte beobachtet. Die Reaktion des anorganischen Trägermaterials kann auch für diese Verbindungen vorzugsweise analog den Verfahren a) - d) (siehe unten) erfolgen.

Bei der Herstellung der Stickstoff enthaltenden anorganischen Trägermaterialien werden beispielsweise
- 0,001 bis 80 Gew.%, vorzugsweise 0,005 bis 60 Gew.%, insbesondere 0,01 bis 50 Gew.-% wenigstens einer Stickstoff enthaltenden Verbindung und
- 20 - 99,999 Gew.%, vorzugsweise 40 - 99,995 Gew.-%, besonders bevorzugt 50 - 99,99 Gew.-% wenigstens eines anorganischen Trägermaterials verwendet.

Als bevorzugte weitere Bestandteile enthalten die Stickstoff enthaltenden anorganischen Trägermaterialien 0,0001 bis 8 Gew.%, vorzugsweise 0,0005 bis 6 Gew.%, insbesondere 0,001 bis 5 Gew.% Emulgatoren. Darüber hinaus können die erfindungsgemäßen Stickstoff enthaltenden anorganischen Trägermaterialien 0,1 bis 15 Gew.%, vorzugsweise 0,5 bis 10 Gew.-%, insbesondere 1 bis 6 Gew.% eines Lösungsmittels enthalten.

Die Stickstoff enthaltenden anorganischen Trägermaterialien können beispielsweise derart hergestellt werden, dass man
a) wenigstens eine Stickstoff enthaltende Verbindung, vorzugsweise eine flüssige, Stickstoff enthaltende Verbindung oder Lösungen wenigstens einer vorzugsweise flüssigen, Stickstoff enthaltenden Verbindung in einem organischen Lösungsmittel, vorzugsweise in einem VOCfreien bzw. VOC-armen Lösungsmittel, mit einem anorganischen Träger mischt, oder
b) wenigstens eine Stickstoff enthaltende Verbindung in einem organischen Lösungsmittel löst und mit einem anorganischen Trägermaterial ggf. unter Zusatz geeigneter Dispergierhilfsmittel mischt und das Stickstoff enthaltende anorganische Trägermaterial isoliert, oder
c) eine Emulsion enthaltend wenigstens eine Stickstoff enthaltende Verbindung, Wasser, wenigstens ein organisches Lösungsmittel und ggf. Emulgatoren mit einem anorganischen Trägermaterial mischt und das Stickstoff enthaltende anorganische Trägermaterial isoliert, oder
d) eine wässrige Dispersion eines anorganischen Trägermaterials, enthaltend ggf. Dispergierhilfsmittel mit einer Emulsion, enthaltend wenigstens eine Stickstoff enthaltende Verbindung, Wasser, wenigstens ein organisches Lösungsmittel und ggf. Emulgatoren mischt und das Stickstoff enthaltende anorganische Trägermaterial isoliert,
e) eine wässrige Dispersion eines anorganischen Trägermaterials, enthaltend gegebenenfalls Dispergierhilfsmittel mit einer wässrigen Lösung, enthaltend wenigstens eine Stickstoff enthaltende Verbindung und gegebenenfalls Emulgatoren mischt und das Stickstoff enthaltende anorganische Trägermaterial isoliert,
wobei die Isolierung des Stickstoff enthaltende anorganische Trägermaterial, erhalten nach den Schritten b) bis e) vorzugsweise durch vollständiges oder teilweises Abtrennen des Lösungsmittels erfolgt, insbesondere durch
- Filtration und ggf. anschließender Trocknung oder
- Verdampfung des Lösungsmittels, bspw. durch Wirbelschichttrocknung, Sprühtrocknung oder Rotationsverdampfung ggf. unter vermindertem Druck.

Bei der Verfahrensalternative a) handelt es sich bevorzugt um bei Standardbedingungen flüssige heterocylische 3-Ringverbindungen, wobei insbesondere pastöse Massen oder trockene Pulver gebildet werden.

Bei der Verfahrensalternative b) sind als bevorzugte Dispergiermittel nicht-ionogene und anionische Emulgatoren geeignet.

Besonders bevorzugt sind nach dem vorgenannten Verfahren, insbesondere nach der Verfahrensweise b) erhältliche Trägermaterialien, die ein Tensid enthalten, bevorzugt anionische, kationische oder amphotere Tenside.

Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium-, Kalium-, Magnesium-, Calcium-, sowie Ammonium- und Triethanolamin-Salze.

Amphotere Tenside sind beispielsweise Alkylarylpolyglycolether, wie Polyoxyethylenoctylphenolether, ethoxyliertes Isooctyl-, Octyl-oder Nonylphenol, Alkylphenol- oder Tributylphenylpolyglycolether, Tris-sterylphenyletherethoxylate, Alkylarylpolyetheralkohole, Isotridecylalkohol, Polyoxyethylen-Fettalkoholether" Polyoxyethylen-Fettsäureester wie z.B. ethoxyliertes Rizinusöl, Polyoxyethylenalkylether oder Polyoxypropylen, Laurylalkoholpolyglycoletheracetat, Sorbitester oder Blockcopolymere auf Basis von Ethylen- und/oder Propylenoxid.

Bei der Verfahrensweise c) werden als bevorzugte organische Lösungsmittel für die Öl-Wasser-Emulsion bevorzugt die oben genannten verwendet.

Bevorzugt ist die Herstellung nach der Verfahrensalternative d). Insbesondere wird dabei zunächst eine Dispersion des anorganischen Trägermaterials in Wasser unter Anwendung vorzugsweise geringer Scherenergie, bspw. durch Verwendung eines Flügelblattrührers hergestellt.

Weitere Zusätze können bei allen Verfahrensweisen in fester, flüssiger oder in gelöster, dispergierter oder emulgierter Form zugegeben werden.

Die vorgenannten Verfahrensalternativen erfolgen bevorzugt bei einer Temperatur von 0 bis 35 °C, insbesondere bei Raumtemperatur (20°C).

### Die unpolaren Lösungsmittel

Bei den vorzugsweise in den erfindungsgemäßen Mitteln vorhandenen unpolaren Lösungsmitteln handelt es sich organische Lösungsmittel mit einer Dielektrizitätskonstante von weniger als 5,00 bei 25°C, vorzugsweise um Kohlenwasserstoffe wie beispielsweise aliphatische, alicyclische oder aromatische Kohlenwasserstoffe, wie beispielsweise Benzinfraktionen, Benzol, Toluol, Xylol, verschiedene Petrolether, Hexan, Cyclohexan, Mineralöle, Paraffinöle, wie z.B. Isoparaffine, hocharomatisches Petroleum wie Naphta, aber auch andere Petroleumfraktionen oder Mischungen der vorgenannten Lösungsmittel.

### Zusammensetzung

Die erfindungsgemäßen Mittel enthalten beispielsweise
- 0,01 bis 70 Gew.%, vorzugsweise 0,05 bis 60 Gew.%, besonders bevorzugt 0,1 bis 50 Gew.% an Mikrokapseln enthaltend zumindest ein iodhaltiges Biozid,
- 0,001 bis 80 Gew.-%, vorzugsweise 0,005 bis 60 Gew.-%, besonders bevorzugt 0,01 bis 50 Gew.% an Stickstoff enthaltenden anorganischen Trägermaterialien
derart, dass die Summe an Mikrokapseln enthaltend zumindest ein iodhaltiges Biozid und Stickstoff enthaltenden anorganischen Trägermaterialien in den erfindungsgemäßen Mitteln 0,011 bis 80 Gew.%, vorzugsweise 0,05 bis 60 Gew.% und besonders bevorzugt 5 bis 50 Gew.% beträgt.

Sofern die erfindungsgemäßen Mittel weiterhin unpolares Lösungsmittel enthalten beträgt die Summe an Mikrokapseln enthaltend zumindest ein iodhaltiges Biozid und Stickstoff enthaltenden anorganischen Trägermaterialien und unpolarem Lösungsmittel in den erfindungsgemäßen Mitteln vorzugsweise 90 Gew.% oder mehr, bevorzugt 95 Gew.-% oder mehr.

In einer weiteren Ausführungsform beträgt das Gewichtsverhältnis von Stickstoff enthaltenden anorganischen Trägermaterialien zu den in den Mikrokapseln enthaltenen iodhaltigen Bioziden in den erfindungsgemäßen Mitteln 1:100 bis 2,8:1, vorzugsweise 1:50 bis 2,25:1 und besonders bevorzugt 20:1 bis 1,8:1.

In einer weiteren Ausführungsform liegenden die Stickstoff enthaltenden anorganischen Trägermaterialien und Mikrokapseln enthaltend zumindest ein iodhaltiges Biozid in den erfindungsgemäßen Mitteln als Suspension in einem unpolaren Lösungsmittel vor.

### Weitere Bestandteile

Weiterhin können die erfindungsgemäßen Mittel als weitere Inhaltsstoffe Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide sowie mineralische und vegetabile Öle enthalten.

Zudem kann sie Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink sowie für heterocyclische 3-Ring-Verbindungen, insbesondere Aziridinverbindungen bekannte Stabilisatoren, beispielsweise Tetramethylethylendiamin (TMEDA), Triethylendiamin und das aus WO2004/05061 bekannte 1,4-Diazabicyclo[2.2.2]octan (DABCO) enthalten.

Weiterhin können die erfindungsgemäßen Mittel als weitere Inhaltsstoffe Hautverhinderer, Antioxidantien, Pigmente und Kristallisationsstabilisatoren beinhalten.

Die Wirksamkeit und das Wirkungsspektrum der erfindungsgemäßen Mittel kann erhöht werden, wenn gegebenenfalls weitere antimikrobiell wirksame Verbindungen wie Fungizide, Bakterizide, Herbizide, Insektizide oder andere Wirkstoffe zur Vergrößerung des Wirkungsspektrums oder Erzielung besonderer Effekte zugesetzt bzw. mit verwendet werden. Solche Mittel können dann ein noch breiteres Wirkungsspektrum besitzen.

In vielen Fällen werden dabei synergistische Effekte beobachtet, d.h. die Wirksamkeit der Mischung ist größer als die Wirksamkeit der Einzelkomponenten.

Die erfindungsgemäßen Mittel können daher ein oder mehrere weitere Biozide enthalten die ausgewählt sind aus folgender Gruppe:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
   Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlofluanid, Tolylfluanid, Folpet, Fluorfolpet; Captan, Captofol;
Benzimidazole wie:
   Carbendazim, Benomyl, Fuberidazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Formaldehyd und Formaldehydabspaltende Verbindungen wie:
   Benzylalkoholmono-(poly)-hemiformal, 1,3-Bis(hydroxymethyl)-5,5-dimethylimidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazolidine, Ethylenglycol-hemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
   Zimtaldehyd, Formaldehyd, Glutardialdehyd, β-Bromzimtaldehyd, ο-Phthaldialdehyd;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z.B. Tributylzinnoxid, Cu₂O, CuO, ZnO;
Oxidationsmittel wie:
   Wasserstoffperoxid, Peressigsäure, Kalium-persulfat;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
sonstige Fungizide und Bakterizide wie:
   Bethoxazin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclo-hexyldiazeniumdioxy)-tributyl-zinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
   Ag, Zn oder Cu-haltige Zeolithe allein oder eingeschlossen in polymere Werkstoffe.
   Ganz besonders bevorzugt sind Mischungen mit

Azaconazol, Bromuconazol, Cyproconazol, Dichlobutrazol, Diniconazol, Diuron, Hexaconazol, Metaconazol, Penconazol, Propiconazol, Tebuconazol, Dichlofluanid, Tolylfluanid, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methylisothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.

Desweiteren werden neben den oben genannten Fungiziden und Bakteriziden auch gut wirksame Mischungen mit anderen Wirkstoffen hergestellt:
Insektizide / Akarizide / Nematizide:
   Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
   Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Ethofenprox, Etrimphos, Etoxazole, Etobenzanid,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
   Halofenocid, HCH (CAS RN: 58-89-9), Heptenophos, Hexaflumuron, Hexythiazox, Hydramethylnon, Hydropren,
   Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
   Kadedrin
   Lambda-Cyhalothrin, Lufenuron,
   Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NI 125, Nicotin, Nitenpyram, Noviflumuron,
   Omethoat, Oxamyl, Oxydemethon M, Oxydeprofos,
   Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
   Quinalphos,
   Resmethrin, Rotenon,
   Salithion, Sebufos, Silafluofen, Spinosad, Spirodiclofen, Spiromesifen, Sulfotep, Sulprofos,
   Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
   Vamidothion, Xylylcarb, Zetamethrin;
Molluscizide:
   Fentinacetat, Metaldehyd, Methiocarb, Niclosamid;
Herbizide und Algizide:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
   Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
   Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazin, Endothal, EPTC, Esprocarb, Ethalfluralin, Ethidimuron, Ethofumesat, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
   Glyphosate, Glufosinate-ammonium
   Haloxyfop, Hexazinon,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
   Naproanilid, Napropamid, Naptalam, Neburon, Nicosulfuron, Norflurazon, Natriumchlorat,
   Oxadiazon, Oxyfluorfen, Oxysulfuron, Orbencarb, Oryzalin, Oxadiargyl,
   Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
   Vernolat.

Die erfindungsgemäßen Mittel können die vorgenannten weiteren Biozide entweder ebenfalls in mikroverkapselter Form enthalten oder unverkapselter Form oder sowohl in verkapselter als auch in unverkapselter Form. Sofern sie zumindest teilweise in verkaspelter Form vorliegen, können die weiteren Biozide in den gleichen Mikrokapseln (Coverkapselung) oder in separaten Mikrokapseln vorliegen.

Die erfindungsgemäßen Mittel können jedoch auch jeweils frei von vorgenannten weiteren Bioziden in toto oder jeweils frei von jeder einzelnen der vorgenannten Verbindungen sein.

### Wirkung

Es wurde gefunden, dass in den erfindungsgemäßen Mitteln die Zersetzung von iodhaltigen Bioziden zum Beispiel durch Licht oder Temperatureinflüsse wirkungsvoll verhindert werden können.

Außerdem sind die erfindungsgemäßen Mittel selbst lange lagerstabil.

Darüber hinaus wurde gefunden, dass mit dem Einsatz der erfindungsgemäßen Mittel in Anstrichmitteln keine anwendungstechnischen Nachteile, wie beispielsweise eine Verlängerung der Trockenzeit einhergeht.

Die erfindungsgemäßen Mittel eignen sich daher insbesondere zum Schutz von technischen Materialien. Technische Materialien sind beispielsweise Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen, verändert oder zersetzt werden können.

Als Mikroorganismen, die eine Zersetzung oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Bakterien.

Es seien beispielsweise Mikroorganismen der folgenden Gattung genannt:

Alternaria, wie Alternaria tenuis, Aspergillus, wie Aspergillus niger, Chaetomium, wie Chaetomium globosum, Coniophora, wie Coniophora puetana, Lentinus, wie Lentinus tigrinus, Penicillium, wie Penicillium glaucum, Polyporus, wie Polyporus versicolor, Aureobasidium, wie Aureobasidium pullulans, Sclerophoma, wie Sclerophoma pityophila, Trichoderma, wie Trichoderma viride, Escherichia, wie Escherichia coli, Pseudomonas, wie Pseudomonas aeruginosa, Staphylococcus, wie Staphylococcus aureus.

Die Erfindung betrifft daher weiterhin technische Materialien ausgerüstet mit den erfindungsgemäßen Mitteln sowie die Verwendnung der erfindungsgemäßen Mittel zum Schutz von technischen Materialien vor Befall, Veränderung oder Zersetzung durch Mikroorganismen sowie ein Verfahren zum Schützen von technischen Materialien vor Befall, Veränderung oder Zersetzung durch Mikroorganismen durch Behandlung der technischen Materialien mit den erfindungsgemäßen Mitteln.

Ganz besonders bevorzugt eignen sich die erfindungsgemäßen Mittel zur Ausrüstung von Anstrichmitteln.

Daher sind von der Erfindung Anstrichmittel umfasst enthaltend
- zumindest ein Bindemittel
- Mikrokapseln enthaltend zumindest ein iodhaltiges Biozid
- zumindest ein Stickstoff enthaltendes anorganisches Trägermaterial
- zumindest ein unpolares Lösungsmittel

Anstrichmitteln können beispielsweise Farben, Lacke, Lasuren, Grundierungen oder Imprägnierungen sein.

Für die Mikrokapseln enthaltend zumindest ein iodhaltiges Biozid, die Stickstoff enthaltenden anorganischen Trägermaterialien sowie die unpolaren Lösungsmittel gelten die gleichen Bereiche, Vorzugsbereiche, Herstellungsmethoden wie sie weiter oben für die erfindungsgemäßen Mittel beschrieben wurden.

Bindemittel sind beispielsweise oxidativ trocknende Bindemittel wie oxidativ trocknende Alkydharze oder durch Koaleszenzmittel verfilmende Bindemittel wie insbesondere Polymerlatices.

Zur Definition des Begriffs "Alkydharze" wird auf oben stehende Offenbarung verwiesen die hier in gleicher Weise gilt.

Die erfindungsgemäßen Anstrichmittel enthalten vorzugsweise 1 bis 80 Gew.% , bevorzugt 2 bis 70 Gew.% und besonders bevorzugt 3 bis 60 Gew.-% an Bindemittel, vorzugsweise Alkydharz.

Vorzugsweise enthalten die erfindungsgemäßen Anstrichmittel sofern sie oxidativ trocknende Bindemittel enthalten weiterhin zumindest ein Übergangsmetallsikkativ.

Übergangsmetallsikkative sind beispielsweise und bevorzugt Salze von Übergangsmetallen der Gruppen Vb, VIb, VIIb, VIII und Ib des chemischen Periodensystems. Insbesondere handelt es sich um die Salze von Cobalt, Mangan, Vanadium, Nickel, Kupfer und Eisen, besonders bevorzugt um Cobalt, Mangan, Eisen und Vanadium. Sie müssen nicht unbedingt nur allein eingesetzt, sondern können auch in Kombination mit nicht Übergangsmetallsalzen, wie Beispielsweise Blei, Calcium oder Zirkonium zum Einsatz kommen.

Besonders bevorzugte Übergangsmetallsalze sind in den unpolaren Lösungsmitteln zu mehr als 10 g/l löslich. Vorzugsweise handelt es sich um die Salze von Carbonsäuren, die eine gute Verträglichkeit mit den Bindemitteln insbesondere den Alkydharzen haben und gleichzeitig eine ausreichende Löslichkeit des Metallsalzes gewährleisten. Verwendet werden bevorzugt Übergangsmetallsalze von Fettsäuren wie Oleate oder Linoleate, von Harzsäuren wie Resinate oder Salze der 2-Ethylhexansäure (Octoate). Bevorzugte Sikkative auf Basis von Übergangsmetallverbindungen sind Cobaltoctoat und Cobaltnaphthenat z.B. Octasoligen^{®}-Cobalt 12 der Firma Borchers.

Bevorzugt enthalten die erfindungsgemäßen Anstrichmittel die Übergangsmetallsikkativ in einer Menge von 0,001 bis 1 Gew.-%, bevorzugt 0,005 bis 0,5 Gew.% und ganz besonders bevorzugt 0,01 bis 0,1 Gew.%, jeweils bezogen auf das Bindemittel.

Die erfindungsgemäßen Anstrichmittel enthalten in einer bevorzugten Ausführungsform weiterhin ein polares organisches Lösungsmittel, vorzugsweise ein polares aprotisches Lösungsmittel. Polare organische Lösungsmittel sind solche mit einer Dielektrizitätskonstante von 5,00 oder mehr bei 25°C, aprotische Lösungsmittel sind solche mit einem pKs-Wert bei 20°C bezogen auf eine wässrige Skala oder berechnet auf eine wässrige Vergleichsskala von 20 oder mehr.

Polare protische organische Lösungsmittel sind bespielsweise Dipropylenglykol-monomethylether (z.B. Dowanol DPM der Fa. Dow Chemical), polare aprotische organische Lösungsmittel sind beispielsweise Dimethylformamid und Dimethylsulfoxid, sowie z.B. veretherte Glykole, Oligoglykole und Polyglykole, veretherte Polyole und veresterte Polyole, Ester von ein- sowie mehrwertigen Carbonsäuren, z.B. Adipinsäurediisobutylester, Maleinsäurediisobutylester (z.B. Rhodiasolv DIB).

Besonders bevorzugt ist ein Anstrichmittel enthaltend
- 1 bis 80 Gew.%, bevorzugt 2 bis 70 Gew.%, besonders bevorzugt 3 bis 60 Gew.% Alkydharz als Bindemittel
- 0,01 bis 5 Gew.%, bevorzugt 0,05 bis 3 Gew.%, besonders bevorzugt 0,1 bis 2 Gew.% an iodhaltigem Biozid vorliegend in Form von Mikrokapseln
- 0,001 bis 7 Gew.%, bevorzugt 0,005 bis 5 Gew.%, besonders bevorzugt 0,01 bis 4 Gew.-% an Stickstoff enthaltenden anorganischen Trägermaterialien,
- 2 bis 97 Gew.% organisches Lösungsmittel, vorzugsweise davon bis zu 10 Gew.%, insbesondere 0,01 bis 7,5 Gew.-%, bezogen auf das Anstrichmittel an polarem aprotischem Lösungsmittel, und
- 0,001 bis 3 Gew.% Übergangsmetallsikkativ.
   sowie gegebenenfalls
- zwischen 0 und 50 Gew-% an Farbpigmenten

Wobei die Summe der vorgenannten Komponenten im Anstrichmittel maximal 100,00 Gew.% beträgt.

Die erfindungsgemäßen Anstrichmittel können gegebenenfalls weiterhin noch Füller, Hautverhinderungsmittel, Rheologieadditive wie beispielsweise Antiabsetzmittel und Thixotropiermittel, weitere Biozide wie Fungizide, Bakterizide, Antifoulingmittel und Algizide, Prozessadditive, Weichmacher, UV-Absorber, UV- und Hitzestabilisatoren, sowie Korrosionsinhibitoren in üblichen Mengen enthalten.

Für die weiteren Biozide gilt die für die erfindungsgemäßen Mittel oben gegebene Offenbarung völlig analog.

Zusätzlich können den Bindemittelformulierungen noch weitere Stabilisatoren zugesetzt werden, wie beispielsweise die in WO 98/22543 genannten Chelatisierungsreagentien oder heterocyclische 3-Ringverbindungen, insbesondere solche mit einem anderen Heteroatom als Stickstoff wie beispielsweise die in WO 00/16628 genannten organischen Epoxide. In vielen Fällen werden hier synergistische Effekte beobachtet.

Darüber hinaus können bei der erfindungsgemäßen Verwendung auch noch ein oder mehrere Verbindungen aus der Reihe der Antioxidantien, Radikalfänger, UV-Stabilisatoren, Chelatoren und UV-Absorber zugesetzt werden, die teilweise synergistische Wirkungen aufweisen.

Beispielhaft seien als UV-Stabilisatoren genannt:
Sterisch gehinderte Phenole, wie
2,6-Di-tert.-butyl-4-methylphenol, 2-tert.-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol oder 2,6-Di-tert.-butyl-4-methoxymethylphenol, Diethyl-(3,5-di-tert-butyl-4-hydroxybenzyl)phosphonate, 2,4-Dimethyl-6-(1-methylpentadecyl)-phenol, 2-Methyl-4,6-Bis[(octylthio)methyl]phenol, 2,6-Di-tert.-butyl- 4-methoxyphenol, 2,5-Di-tert.-butyl-hydrochinon, 2,5-Di-tert.-amyl-hydrochinon, 2,6-Diphenyl-4-octadecyloxyphenol, 2,2`-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylen-bis-(4-methyl-6-cyclohexylphenol), 2,2'-Methylen-bis-(4,6-di-tert.-butylphenol), 2,2'-Ethyliden-bis-(4,6-di-tert.-butylphenol), 4,4'-Methylen-bis-(2,6-di-tert.-butylphenol), 4,4'-Methylen-bis-(6-tert.-butyl- 2-methylphenol), 1,1-Bis-(5-tert.-butyl-4-hydroxy-2-methylphenyl)-butan, 1,1,3-Tris-(5-tert.-butyl-4-hydroxy-2-methylphenyl)-butan, 1,3,5-Tri-(3,5-di-tert.-butyl-4-hydroxybenzyl)-2,4,6-trimethylbenzol, 3,5-Di-tert.-butyl-4-hydroxybenzyl- mercaptoessigsäure-isooctylester, 1,3,5-Tris-(3,5-di-tert.-butyl-4-hydroxybenzyl)-isocyanurat, 1,3,5-Tris-(4-tert.butyl-3-hydroxy-2,6-dimethylbenzyl)-isocyanurat, 1,3,5-Tris[(3,5-di-tert-butyl-4-hydroxyphenyl)propionyloxyethyl] isocyanurate, 3,5-Di-tert.-butyl-4-hydroxybenzyl-phosphonsäure-dioctadecylester, 3,5-Di-tert.-butyl-4-hydroxybenzyl-phosphonsäure-monoethylester-Calciunr-salz, N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin, N,N'-Di-(3,5-di-tert-butyl-4-hydroxyphenyl-propionyl)-hydrazin, 3,9-Bis[1,1-dimethyl-2-[(3-tert-butyl-4-hydroxy-5-methylphenyl)propionyloxy]ethyl]-2,4,8,10-tetraoxaspiro[5.5]undecane, Bis[3,3-bis(4'-hydroxy-3'-tert-butylphenyl)butanoic acid] ethylene glycol ester, 2,6-bis[[3-(1,1-dimethylethyl)-2-hydroxy-5-methylphenyl]octahydro-4,7-methano-1H-indenyl]-4-methyl-phenol (= Wingstay L), 2,4-Bis(n-octylthio)-6-(3,5-di-tert-butyl-4-hydroxyphenylamino)-s-triazine, N-(4-Hydroxyphenyl)octadecanamide, 2,4-Di-tert-butylphenyl 3',5'-di-tert-butyl-4'-hydroxybenzoate, (Benzoic acid, 3,5-bis(1,1-dimethylethyl)-4-hydroxy-, hexadecyl ester), 3-Hydroxyphenyl benzoate, 2,2'-Methylenebis(6-tert-butyl-4-methylphenol) monoacrylate, 2-(1,1-dimethylethyl)-6-[1-[3-(1,1-dimethylethyl)-5-(1,1-dimethylpropyl)-2-hydroxyphenyl]ethyl]-4-(1,1-dimethylpropyl)phenyl ester, Ester der β-(3,5-Di-tert.-butyl-4-hydroxyphenyl)-propionsäure mit ein- oder mehrwertigen Alkoholen wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid,
Ester der β-(5-tert--Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid.
Gehinderte Amine wie,
Bis(1,2,2,6,6-pentamethyl-4-piperidyl) 2-(3,5-di-tert-butyl-4-hydroxybenzyl)-2-butyl malonat, Bis(2,2,6,6-tetramethyl-4-piperidyl) decanedioat, Dimethyl succinate-1-(2-hydroxyethyl)-4-hydroxy-2,2,6,6-tetramethylpiperidin copolymer, Poly[[6-[(1,1,3,3-tetramethylbutyl)amino]-1,3,5-triazine-2,4-diyl] [(2,2,6,6-tetramethyl-4-piperidyl)imino]hexamethylen[(2,2,6,6-tetramethyl-4-piperidyl)imino]] (CAS-Nr 71878-19-8), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecan (CAS-Nr. 106990-43-6), Bis(1,2,2,6,6-pentamethyl-4-piperidyl) decanedioat, Bis(1,2,2,6,6-pentamethyl-4-piperidyl) 2-(3,5-di-tert-butyl-4-hydroxybenzyl)-2-butyl malonat, Decanedioic acid, bis(2,2,6,6-tetramethyl-4-piperidinyl) ester, Chimasorb 2020 (CAS-Nr 192268-64-7), Poly[[6-morpholino-1,3,5-triazin-2,4-diyl] [(2,2,6,6-tetramethyl-4-piperidinyl)imino]-1,6-hexanediyl[(2,2,6,6-tetramethyl-4-piperidinyl)imino]], Poly[[6-(4-morpholinyl)-1,3,5-triazine-2,4-diyl][(1,2,2,6,6-pentamethyl-4-piperidinyl)imino]-1,6-hexanediyl[(1,2,2,6,6-pentamethyl-4-piperidinyl)imino]] (9CI), 3-Dodecyl-1-(2,2,6,6-tetramethyl-4-piperidyl)pyrrolidin-2,5-dion, 3-Dodecyl-1-(1,2,2,6,6-pentamethylpiperidin-4-yl)pyrrolidin-2,5-dion,,4-Octadecanoyloxy-2,2,6,6-tetramethylpiperidin, Poly[[6-(cyclohexylamino)-1,3,5-triazin-2,4-diyl][(2,2,6,6-tetramethyl-4-piperidinyl)imino]-1,6-hexanediyl[(2,2,6,6-tetramethyl-4-piperidinyl)imino]], 1H,4H,5H,8H-2,3a,4a,6,7a,8a-Hexaazacyclopenta[def]fluorene-4,8-dion, hexahydro-2,6-bis(2,2,6,6-tetramethyl-4-piperidinyl)-(CAS-Nr 109423-00-9), N,N'-Bis(formyl)-N,N'-bis(2,2,6,6-tetramethyl-4-piperidyl)-1,6-hexanediamin, N-(tetramethyl-4-piperidinyl)maleimide-C20-24-α-olefin copolymer (CAS-Nr 199237-39-3), Tetrakis(1,2,2,6,6-pentamethyl-4-piperidyl) 1,2,3,4-butanetetracarboxylat, Tetrakis(2,2,6,6-tetramethyl-4-piperidyl) 1,2,3,4-butanetetracarboxylat, 1,2,2,6,6-Pentamethyl-4-piperidinyl tridecyl 1,2,3,4-butanetetracarboxylat, (1,2,3,4-Butanetetracarboxylic acid, 2,2,6,6-tetramethyl-4-piperidinyl tridecyl ester), (2,4,8,10-Tetraoxaspiro[5.5]undecane-3,9-diethanol, β,β,β',β'-tetramethyl-, polymer mit 1,2,3,4-butanetetracarbonsäure) (CAS-Nr 115055-30-6), 2,2,4,4-Tetramethyl-21-oxo-7-oxa-3,20-diazadispiro[5.1.11.2]heneicosan, (7-Oxa-3,20-diazadispiro[5.1.11.2]heneicosan-20-propansäure, 2,2,4,4-tetramethyl-21-oxo-, tetradecyl ester), (7-Oxa-3,20-diazadispiro[5.1.11.2]heneicosan-21-on, 2,2,4,4-tetramethyl-20-(oxiranylmethyl)-), (Propanamid, N-(2,2,6,6-tetramethyl-4-piperidinyl)-3-[(2,2,6,6-tetramethyl-4-piperidinyl)amino]-), (1,3-Propanediamin, N,N"-1,2-ethanediylbis-, polymer mit 2,4,6-trichlor-1,3,5-triazine, Reaktionsprodukte mit N-butyl-2,2,6,6-tetramethyl-4-piperidinamin) (CAS-Nr 136504-96-6), 1,1'-Ethylenebis(3,3,5,5-tetramethyl-2-piperazinon), (Piperazinon, 1,1',1"-[1,3,5-triazine-2,4,6-triyltris[(cyclohexylimino)-2,1-ethanediyl]]tris[3,3,5,5-tetramethyl-), (7-Oxa-3,20-diazadispiro[5.1.11.2]heneicosan-20-propansäure, 2,2,4,4-tetramethyl-21-oxo-, dodecyl ester), 1,1-Bis(1,2,2,6,6-pentamethyl-4-piperidyloxycarbonyl)-2-(4-methoxyphenyl)ethen, (2-Propensäure, 2-methyl-, methyl ester, polymer mit 2,2,6,6-tetramethyl-4-piperidinyl 2-propenoat) (CAS-Nr 154636-12-1), (Propanamid, 2-methyl-N-(2,2,6,6-tetramethyl-4-piperidinyl)-2-[(2,2,6,6-tetramethyl-4-piperidinyl)amino]-), (D-Glucitol, 1,3:2,4-bis-O-(2,2,6,6-tetramethyl-4-piperidinylidene)-) (CA-Nr 99473-08-2), N,N'-Bis(2,2,6,6-tetramethyl-4-piperidinyl)isophthalamid, 4-Hydroxy2,2,6,6-tetramethylpiperidin, 1-Allyl-4-hydroxy-2,2,6,6-tetramethylpiperidin, 1-Benzyl-4-hydroxy-2,2,6,6-tetramethylpiperidin, 1-(4-tert.-Butyl-2-butenyl)-4-hydroxy-2,2,6,6-tetramethylpiperidin, 4-Stearoyloxy-2,2,6,6-tetramethylpiperidin, 1-Ethyl-4-salicyloyloxy-2,2,6,6-tetramethylpiperidin, 4-Methacryloyloxy-1,2,2,6,6-pentamethylpiperidin, 1,2,2,6,6-Pentamethylpiperidin-4-yl-β-(3,5-ditert.-butyl-4-hydroxyphenyl)-propionat, 1-Benzyl-2,2,6,6-tetramethyl-4-piperidinylmaleinat, (Di-2,2,6,6-tetramethylpiperidin-4-yl)-adipat, (Di-2,2,6,6-tetramethylpiperidin-4-yl)-sebacat, (Di-1,2,3,3,6-tetramethyl-2,6-diethyl-piperidin-4-yl)sebacat, (Di-1-allyl-2,2,6,6-tetramethyl-piperidin-4-yl)phthalat, 1-Propargy14-β-cyanoethyloxy-2,2,6,6-tetramethylpiperidin, 1-Acetyl-2,2,6,6-tetramethylpiperidin-4-yl-acetat, (Trimellith säure-tri-(2,2,6,6-tetramethylpiperidin-4-yl)ester), 1-Acryloyl-4-benzyloxy-2,2,6,6-tetramethylpiperidin, Dibutyl-malonsäure-di-(1,2,2,6,6-pentamethyl-piperidin-4-yl)-ester, Butyl-(3,5-di-tert-butyl-4-hydroxybenzyl)-malonsäure-di-(1,2,2,6,6-pentamethylpiperidin-4-yl)ester, Dibenzylmalonsäure-di-(1,2,2,6,6-pentamethylpiperidin-4-yl)ester, Dibenzyl-malonsäure-di-(1,2,3,6-tetramethyl-2,6-diethyl-piperidin-4-yl)ester, Hexan-1',6'-bis-(4-carbamoyloxy-1-n-butyl-2,2,6,6-tetramethylpiperidin), Toluol-2',4'-bis-(4-carbamoyloxy-1-n-propyl-2,2,6,6-tetramethylpiperidin), Dimethyl-bis-(2,2,6,6- tetramethylpiperidin-4-oxy)silan, Phenyl-tris-(2,2,6,6-tetramethylpiperidin-4-oxy)silan, Tris-(1-propyl-2,2,6,6-tetramethylpiperidin-4-yl)phosphit, Tris-(1-propyl-2,2,6,6-tetramethylpiperidin-4-yl)phosphat, Phenyl-[bis-(1,2,2,6,6-pentamethylpiperidin-4-yl)phosphonat, Di(1,2,2,6,6-pentamethylpiperidin- 4-yl)sebacat, NN'-Bis-(2,2,6,6-tetramethylpiperidin-4-yl)hexamethylen- 1,6-diamin, NN'-Bis-(2,2,6,6-tetramethylpiperidin-4-yl)hexamethylen- 1,6-diacetamid, 1-Acetyl-4-(N-cyclohexylacetamido)-2,2,6,6-tetramethylpiperidin, 4-Benzylamino-2,2,6,6-tetramethylpiperidin, N,N'-Bis-(2,2,6,6-tetramethylpiperidin-4-yl)-N,N'-dibutyladipamid, N,N'-Bis-(2,2,6,6-tetramethylpiperidin-4-yl)-N,N'-dicyclohexyl-(2-hydroxypropylen), NN'-Bis-(2,2,6,6-tetramethylpiperidin- 4-yl)-p-xylylenediamin, 4-(Bis-2-hydroxyethyl)-amino-1,2,2,6,6-pentamethylpiperidin, 4-(3-Methyl-4-hydroxy-5-tert.-butyl-benzoicacidamido)-2,2,6,6-tetramethylpiperidin, 4-Methacrylamino-1,2,2,6,6-pentamethylpiperidin, 9-Aza-8,8,10,10-tetramethyl-1,5-dioxaspiro[5.5]undecan, 9-Aza-8,8,10,10-tetramethyl-3-ethyl-1,5-dioxaspiro[5.51undecan, 8-Aza-2,7,7,8,9,9-hexamethyl- 1,4-dioxaspiro[4.5]decan, 9-Aza-3-hydroxymethyl-3-ethyl-8,8,9,10,10-pentamethyl-1-5-dioxaspiro[5.5]undecan, 9-Aza-3-ethyl-3-acetoxymethyl- 9-acetyl-8,8,10,10-tetramethyl- 1,5-dioxaspiro[5.5]undecan, 2,2,6,6-Tetramethylpiperidin-4-spiro-2'-(1',3'-dioxane)5'-spiro-5"-(1",3"-dioxan)-2"-spiro4"-(2"',2"',6"',6"'-tetramethyl piperidin), 3-Benzyl-1,3,8-triaza-7,7,9,9-tetramethyl-spiro[4.5]decane-2,4-dion, 3-n-Octyl-1,3,8-triaza-7,7,9,9-tetramethyl-spiro[4.5]decane-2,4-dion, 3-Allyl-1,3,8-triaza-1,7,7,9,9-pentamethyl-spiro[4.5]decane-2,4.dion, 3-Glycidyl-1,3,8-triaza-7,7,8,9,9- pentamethyl-spiro(4.5]decane-2,4-dion, 2-Isopropyl-7,7,9,9-tetramethyl-1-oxa- 3,8-diaza-4-oxyspiro[4.5]decae, 2-Butyl-7,7,9,9-tetramethyl-1-oxa-3,8-diaza-4-oxyspiro[4.5]decan, 2-Isopropyl-7,7,9,9-tetramethyl-1-oxa-4,8-diaza-oxyspiro[4.5]decan, 2-Butyl-7,7,9,9-tetramethyl-1-oxa-4,8-diaza-3-oxyspiro[4.5]decan, Bis-[β-(2,2,6,6-tetramethylpiperidino)-ethyl]-sebacate, α-(2,2,6,6-tetramethylpiperidino)-essigsäure-n-octyl ester, 1 ,4-bis-(2,2,6,6-tetramethylpiperidino)- 2-buten, N-Hydroxymethyl-N'-2,2,6,6-tetramethylpiperidin-4-yl-harnstoff, N-Methoxymethyl-N'-2,2,6,6-tetramethylpiperidin-4-yl- harnstoff, N-Methoxymethyl-N'-n-dodecyl-N'-2,2,6,6-tetramethylpiperidin-4-yl- harnstoff, O-(2,2,6,6-Tetramethylpiperidin-4-yl)-N-methoxymethyl-urethan.
Phosphite und Phosphonate wie,
Tri(nonylphenyl) phosphit, Tris(2,4-di-tert-butylphenyl) phosphite, Bis(2,4-di-tert-butylphenyl) pentaerythritol diphosphit, Bis(2,6-di-tert-butyl-4-methylphenyl)pentaerythritol diphosphit, 2,2'-Methylenebis(4,6-di-tert-butylphenyl) octyl phosphit, Tetrakis(2,4-di-tert-butylphenyl)[1,1'-biphenyl]-4,4'-diylbisphosphonit, 2,2'-Ethylidenebis(4,6-di-tert-butylphenyl) fluorophosphite, Dioctadecyl pentaerythritol diphosphonit, 2-[[2,4,8,10-Tetrakis(1,1-dimethylethyl)dibenzo[d,f]-[1,3,2]dioxaphosphepin-6-yl]oxy]-N,N-bis[2-[[2,4,8,10-tetrakis(1,1-dimethylethyl)dibenzo-[d,f][1,3,2]dioxaphosphepin-6-yl]oxy]ethyl]ethanamin (CAS-Nr. 80410-33-9), Bis(2,4-di-tert-butyl-6-methylphenyl) ethyl phosphit, 2,4,6-Tri-tert-butylphenyl-2-butyl-2-ethyl-1,3-propanediol phosphit oder Bis(2,4-dicumylphenyl) pentaerythritol diphosphit,
Hydroxylamine wie,
N,N-Bis(2-carboxyethyl)hydroxylamin, N,N-Bis(benzylthiomethyl)hydroxylamin, N,N-Diethylhydroxylamin.

Sekundare Arylamine wie N-(2-Naphthyl)-N-phenylamin, 2,2,4-Trimethyl-1,2-dihydroquinoline polymer (CAS-Nr: 26780-96-1), N-2-Propyl-N'-phenyl-p-phenylenediamin, N-(1-Naphthyl)-N-phenylamine, (Benzenamin, N-phenyl-, Reraktionsprodukte mit 2,4,4-trimethylpenten) (CAS-Nr. 68411-46-1) oder 4-(1-Methyl-1-phenylethyl)-N-[4-(1-methyl-1-phenylethyl)phenyl]anilin.

Lactone und Benzofuranone wie Irganox HP 136 (CAS Nr. 181314-48-7)

Thioether und Thioester wie,

Distearyl-3,3-thiodipropionat, Dilauryl 3,3'-thiodipropionat, Ditetradecylthiodipropionat, Di-n-octadecyl disulfie.

Als UV-Absorber seien genannt:
(Methanon, [methylenebis(hydroxymethoxyphenylene)]bis[phenyl-), (Methanon, [1,6-hexanediylbis[oxy(2-hydroxy-4,1-phenylene)]]bis[phenyl-), 2-Benzoyl-5-methoxyphenol, 2,4-Dihydroxybenzophenon, 2,2'-Dihydroxy-4-methoxybenzophenon, 2-Hydroxy-4-octyloxybenzophenon, 2-Hydroxy-4-dodecyloxybenzophenon, 2-(2-Hydroxy-4-hexyloxyphenyl)-4,6-diphenyl-1,3,5-triazin, 2,4-Bis(2,4-dimethylphenyl)-6-(2-hydroxy-4-octyloxyphenyl)-1,3,5-triazine, 2-Ethoxy-2'-ethyloxalsäure bisanilid, N-(5-tert-Butyl-2-ethoxyphenyl)-N'-(2-ethylphenyl)-oxamide, Dimethyl (p-methoxybenzylidene)malonat, 2,2'-(1,4-Phenylene)bis[3,1-benzoxazin-4-one], N'-(4-Ethoxycarbonylphenyl)-N-methyl-N-phenylformamidin, 4-Methoxyzimtsäure-2-ethylhexyl ester, 4-Methoxyzimtsäure isoamyl-ester, 2-Phenylbenzimidazol-5-sulfonsäure, 2-Cyano-3,3-diphenylacrylsäure 2-ethylhexyl ester, 2-Ethylhexyl salicylat oder 3-(4-Methylbenzylidene)bornan-2-on,
Chelatoren wie,
Ethylendiamintetraacetat (EDTA), Ethylendiamin, Acetylaceton, Nitrilotriessigsäure, Ethylenglycol-bis(β-aminoethyl ether)-N,N-tetraessigsäure, 2,2'-Bipyridin, 4,4'-Dimethyl-2,2'-bipyridin, 2,2',6',2"-Terpyridin, ,4,4'Diphenyl-2,2'-bipyridin, 2,2'-Bipyridin-3,3'-diol, 1,10-Phenanthroline, 4-Methyl-1,10-phenanthroline, 5-Methyl-1,10-phenanthrolin, 4,7-Dimethyl-1,10-phenanthrolin, 5,6-Dimethyl-1,10-phenanthrolin, 3,4,7,8-Tetramethyl-1,10-phenanthrolin, 4,7-Diphenyl-1,10-phenanthrolin, 2,4,7,9-Tetramethyl-1,10-phenanthrolin, N,N,N' ,N'-Tetramethylethylendiamin, 2-Hydroxychinolin, 8-Hydroxychinolin, 2-Hydroxy-4-methyl-chinaldin, 5-Chlor-8-hydroxychinolin, 5,7-Dichlor-8-hydroxychinolin, 2,4-Chinolindiol, 2-Chinolinthiol, 8-Chinolinthiol, 8-Aminochinolin, 2,2'-Bichinolin, 2-Chinoxalinol, 3-Methyl-2-chinoxalinol, 2,3-Dihydroxychinoxaline, 2-Mercaptopyridin, 2-Dimethylaminopyridin, 1,2-Bis(Di-methylphosphino)ethan, 1,2-Bis-(diphenylphosphino)ethan, 1,3-bis(diphenylphosphino)propan, 1,4-Bis(diphenylphosphino)butan, Polyasparaginsäure oder Iminodisuccinat.

Vorgenannte UV-Adsorber und UV-Stabilisatoren können auch Bestandteil der erfindungsgemäßen Mttel sein oder nicht.

Die Zersetzung iodhaltiger Biozide wird vor allem in Gegenwart der oben näher beschriebenen Übergangsmetallsikkative gefördert. Obwohl die stärksten zersetzenden Effekte in Gegenwart dieser Übergangsmetallsikkative beobachtet werden, haben auch eine Reihe von weiteren Komponenten einen destabilisierenden Effekt auf iodhaltige Biozide. Zu nennen sind hier anorganische und organische Pigmente, Füller, Hautverhinderungsmittel, Rheologieadditive wie beispielsweise Antiabsetzmittel und Thixotropiermittel, weitere Verbindungen, insbesondere Biozide wie Fungizide, Bakterizide, Antifoulingmittel und Algizide, Lösungsmittel, Prozessadditive, Weichmacher, UV- und Hitzestabilisatoren, Korrosionsinhibitoren usw.

In den erfindungsgemäßen Anstrichmitteln kann die Zersetzung überraschenderweise weitgehend oder vollständig vermieden werden, eine Verlängerung der Trockenzeit im Vergleich zu nicht mit mikrokapseln enthaltend iodhaltige Biozide und Stickstoff enthaltenden anorganischen Trägermaterialien ausgerüsteten Anstrichmitteln, sogenannten Blank-Formulierungen wird nicht beobachtet.

Somit findet, ohne dass die Anmelderin sich wissenschaftlich darauf festlegen will, vermutlich ein anderer Mechanismus statt, als eine Entfernung von Metallionen, wie man dies beispielsweise mit Polymerisaten von Aziridinen zur Entfernung von Schwermetallionen aus Abwässern in DE-A1-1 96 27 909 beschrieben ist. Eine Entfernung von Schwermetallionen, würde die Wirkung der Übergangsmetallsikkative abschwächen und somit die Trockungszeit der Anstrichmittel dementsprechend verlängern.

### Beispiele

### Beispiel 1 (IPBC-Dispersion I)

150g einer 50 Gew.-% igen Lösung eines langöligen, thixotropierten Alkydharzes in Isoparaffin (Worlee S 6358; Worlee-Chemie GmbH, Lauenburg, Deutschland), welches zunächst durch 15 minütiges Rühren am Dissolver bei 8000 bis 12000 U/min und Erwärmung auf 65°C glattgerührt wurde, wurde vorlegt und nacheinander mit 404,4 g IPBC (Iodpropinylbutylcarbamat) und 445,6 g Isoparaffin (Isopar L; Siedebereich 180 bis 220 °C) am Dissolver eingearbeitet. Anschließend wurde 45 min bei 3500 U/min am Dissolver nachgerührt.
Die erhaltene dünnflüssige Dispersion wurde anschließend zweimal über eine Perlmühle (Dyno-Mill; Multilab, 300ml-Mahlbehälter mit 80 % Füllgrad und Zirkoniumoxidkugeln mit 0,4 bis 0,6 mm Durchmesser) gemahlen. Man erhielt 877 g einer weißen, dünnflüssigen Dispersion.

### Beispiel 2 (Dispersion I mit verkapseltem IPBC)

5,52 g einer Mischung aus 1,4-Butandiol und Trimethylolpropan (10:2) und 11,96 g einer 7,63 Gew.-%igen Lösung von Tanemul 508 (nicht ionisches Tensid auf Basis von ethoxyliertem/propoxyliertem Stearylalkohol mit einem HLB-Wert (HLB = hydrophilic lipophilic balance) von ca. 13 in Isopar L wurden 10 min bei 24000U/min am Ultraturax mit 60g der Dispersion I aus Beispiel 1 gerührt.
Anschließend wurde die Mischung in einen 250 ml Kolben überführt und unter Stickstoffschutzgas unter Rühren 1,32 g Katalysator (1 Gew.-%ige Lösung von Dibutylzinndilaurat in Isopar L) und eine Lösung von 12,4 g Tolyl-2,4-diisocyanat (TDI) in 12,4 g Isopar L innerhalb von 1,5 Stunden zugetropft. Nach 1,5 Stunden Nachrührzeit bei Raumtemperatur wurde eine Stunde bei 40 °C und 48 h bei Raumtemperatur nachgerührt. Man erhielt 103,6 g einer weißen Dispersion mit einem IPBC-Gehalt von 23,17 Gew.-%.

### Beispiel 3 (Dispersion II mit verkapseltem IPBC)

13,8g einer Mischung aus 1,3-Propandiol und Trimethylolpropan (10:2) und 29,9g einer 7,63 % igen Lösung von Tanemul 508 in Isopar L wurden 10 min bei 24000U/min am Ultraturax mit 150g der Dispersion I aus Beispiel 1 gerührt.
Anschließend wurde die Mischung in einen 250 ml Kolben überführt und unter Stickstoffschutzgas unter Rühren 6,6 g Katalysator (1 Gew.-%ige Lösung von Dibutylzinndilaurat in Isopar L) und eine Lösung von 31,0 g TDI in 31,0 g Isopar L innerhalb von 1,5 Stunden zugetropft. Nach 1,5 Stunden Nachrührzeit bei Raumtemperatur wurde eine Stunde bei 40 °C und 48 h bei Raumtemperatur nachgerührt. Man erhielt 258,9 g einer weißen bis hellgelben Dispersion mit einem IPBC-Gehalt von 23,17 Gew.-%.

### Beispiel 4 (Dispersion III mit verkapseltem IPBC)

5,52g einer Mischung aus 1,3-Propandiol und Trimethylolpropan (2:1) und 11,96 g einer 7,63 Gew.-%igen Lösung von Tanemul 508 in Isopar L wurden 10 min bei 24000U/min am Ultraturax mit 60g der Dispersion I aus Beispiel 1 gerührt.
Anschließend wurde die Mischung in einen Kolben überführt und unter Stickstoffschutzgas unter Rühren 1,32 g Katalysator (1 %ige Lösung von Dibutylzinndilaurat in Isopar L) und eine Lösung von 12,0 g TDI in 12,0 g Isopar L innerhalb von 1,5 Stunden zugetropft. Nach 20 Min Nachrührzeit bei Raumtemperatur wurde noch 2 Stunden bei 40 °C gerührt.
Zur entstandenen Suspension werden weitere 2,76 g der Mischung aus 1,3-Propandiol und Trimethylolpropan (2:1) gegeben und 10 Min bei 24000 upm geturraxt. Man kühlt mit dem Eisbad auf 16 bis 18 °C, gab weitere 0,66 g des oben genannten Katalysators zu und tropfte danach weitere 12,4 g einer 1:1 Mischung von TDI in Isopar L zu. Die zunächst dicker weidende Suspension wurde dann eine Stunde bei 40 °C und anschließend 16 Stunden bei Raumtemperatur nachgerührt.
Man erhielt 119,42 g einer weißen bis hellgelben Dispersion mit einem IPBC-Gehalt von 22,1 Gew.-%.

### Beispiel 5 (Dispersion IV mit verkapseltem IPBC)

90 g einer 50 Gew.-%igen Lösung eines langöligen, thixotropierten Alkydharzes in Isoparaffin (Worlee S 6358; Worlee-Chemie GmbH, Lauenburg, Deutschland), welches zunächst durch 15 minütiges Rühren am Dissolver bei 8000 bis 12000 U/min und Erwärmung auf 65°C glattgerührt wurde, wurde vorlegt und nacheinander mit 242,7 g IPBC, 5,52 g Guanidincarbonat, 61,1g Ethylendiammoniumdichlorid und 200,7 g Isoparaffin (Isopar L; Siedebereich 180 bis 220 °C) am Dissolver eingearbeitet. Anschließend wurde 45 min bei 3500 U/min am Dissolver nachgerührt. Man erhielt eine sehr dünnflüssige Suspension. Die erhaltene Dispersion wurde anschließend zweimal über eine Perlmühle (Dyno-Mill; Multilab, 300ml-Mahlbehälter mit 80 % Füllgrad und Zirkoniumoxidkugeln von 0,4 bis 0,6 mm Durchmesser) gemahlen. Man erhielt 460 g einer weißen, dünnflüssigen Dispersion, die man über Nacht reifen ließ.

60 g der obigen Suspension werden vorgelegt, mit 10 g Isopar L und 3 Tropfen Ethylendiamin versetzt und dann nach Zugabe von 14,8 g einer Mischung aus 50 Gew.-% Desmodur N3400 (Hexamethylen diisocyanat uretdion, CAS-Nr. 23501-81-7), 42,37 % Gew.-Isopar L und 7,63 Gew.-% Tanemul KS 5 min am Ultraturrax bei 24000 U/min behandelt. Anschließend wurde 16 Stunden bei 40 °C gerührt. Man erhielt 84,8 g einer weißen, dickflüssigen Dispersion mit einem IPBC-Anteil von 28,3 Gew.-%.

### Beispiel 6 (Stabilisator I)

Eine Ölphase bestehend aus 28,0 g Crosslinker CX-100 der Fa. DSM (Trimethylolpropan-tris[3-(2-methyl-1-aziridinyl)propionat] und 7,78 g Rhodiasolv^{®} DIB der Fa. Rhodia (Gemisch bestehend aus Diisobutyladipat, Diisobutylglutarat und Diisobutylsuccinat) wurde mit einer Emulgatorlösung aus 1,78 g Tanemul^{®} KS der Fa. Tanatex (Ricinusöl-Ethoxylat mit 30 eq. EO) in 60 g Wasser unter Einwirkung eines Ultraturrax (24.000 U*min⁻¹) 10 Minuten emulgiert. Die erhaltene farblose Emulsion wurde zu einer Dispersion von 54,0 g Aerosil^{®} 200 der Fa. Evonik (pyrogene Kieselsäure mit einer BET-Oberfläche von 200m²/g und einem DBP-Absorptionsvermögen von 300g/100g) in 300g Wasser unter Flügelblattrührung dosiert und anschließend 24 Stunden gerührt.

Das mit dem Aziridin und Rhodiasolv DIB beladene Aerosil wurde aus der erhaltenen Dispersion durch Sprühtrocknung isoliert (Büchi B-290 Sprühtrockner, Pumpenleistung 60%, N₂-Fluß 45 1*min⁻¹, Inlet 160°C, Outlet 53 bis 61°C). Es wurden 85 g eines sehr feinen, farblosen Feststoffes erhalten. Der Stickstoffgehalt bertrug 2,00 Gew.-%.

### Beispiel 7 (Stabilisator II)

Eine Ölphase bestehend aus 14,0 g Corial Härter AN der Fa. BASF (Trimethylolpropan-tris[3-(1-aziridinyl)propionat] und 3,89 g Rhodiasolv^{®} DIB der Fa. Rhodia (Gemisch bestehend aus Diisobutyladipat, Diisobutylglutarat und Diisobutylsuccinat) wurde mit einer Emulgatorlösung aus 0,89 g Tanemul^{®} KS der Fa. Tanatex (Ricinusöl-Ethoxylat mit 30 eq. EO) in 29,1 g Wasser unter Einwirkung eines Ultraturrax (24.000 U*min⁻¹) 10 Minuten emulgiert. Die erhaltene farblose Emulsion wurde zu einer Dispersion von 27,0 g Aerosil^{®} 200 der Fa. Evonik (pyrogene Kieselsäure mit einer BET-Oberfläche von 200m²/g und einem DBP-Absorptionsvermögen von 300g/100g) in 600g Wasser unter Flügelblattrührung dosiert und anschließend 16 Stunden gerührt.

Das mit dem Aziridin und Rhodiasolv DIB beladene Aerosil wurde aus der erhaltenen Dispersion durch Sprühtrocknung isoliert (Büchi B-290 Sprühtrockner, Pumpenleistung 45%, N₂-Fluß 45 1*min⁻¹, Inlet 160°C, Outlet 59°C). Es wurden 34,77 g eines sehr feinen, farblosen Feststoffes erhalten und 3,5 g eines groben Feststoffes. Der Stickstoffgehalt bertrug 2,97 Gew.-%.

### Beispiel 8 (Stabilisator III)

11,9 g Corialhärter AN der Fa. BASF (Trimethylolpropan-tris[3-(1-aziridinyl)propionat] werden in 8,1g Wasser gelöst. Die erhaltene farblose Lösung wurde zu einer Dispersion von 27,0 g Aerosil^{®} 200 der Fa. Evonik (pyrogene Kieselsäure mit einer BET-Oberfläche von 200m²/g und einem DBP-Absorptionsvermögen von 300g/100g) in 591g Wasser unter Flügelblattrührung dosiert und anschließend 24 Stunden gerührt.

Das mit dem Aziridin beladene Aerosil wurde aus der erhaltenen Dispersion durch Sprühtrocknung isoliert (Büchi B-290 Sprühtrockner, Pumpenleistung 45%, N₂-Fluß 45 1*min⁻¹, Inlet 160°C, Outlet 59°C). Es wurden 32,68 g eines sehr feinen, farblosen Feststoffes erhalten und 4,5 g eines groben Feststoffes. Der Stickstoffgehalt bertrug 2,93 Gew.-%.

### Beispiel 9 (Stabilisierte IPBC Dispersion, D-I

30 g der Dispersion aus Beispiel 2 wurden mit 10 g Isopar L und 7,72 g des Stabilisators I aus Beispiel 6 versetzt und 10 min mit dem Ultraturax bei 24000U/min gemischt. Man erhielt eine weiße Dispersion mit einem Gehalt von 14,57 Gew.-% IPBC.

### Beispiel 10 (Stabilisierte IPBC Dispersion, D-II)

30,1 g der Dispersion aus Beispiel 3 wurden mit 15 g Isopar L und 7,62 g des Stabilisators II aus Beispiel 7 versetzt und 5 min mit dem Ultraturax bei 24000U/min gemischt. Man erhielt eine weiße Dispersion mit einem Gehalt von 13,22 Gew.-% IPBC.

### Beispiel 11 (Stabilisierte IPBC Dispersion, D-III)

30 g der Dispersion aus Beispiel 3 wurden mit 15 g Isopar L und 7,65 g des Stabilisators III aus Beispiel 8 versetzt und 5 min mit dem Ultraturax bei 24000U/min gemischt. Man erhielt eine weiße Dispersion mit einem Gehalt von 13,2 Gew.-% IPBC.

### Beispiel 12 (Stabilisierte IPBC Dispersion, D-IV)

100 g der Dispersion aus Beispiel 3 wurden mit 49,27 g Isopar L und 27,74 g des Stabilisators I aus Beispiel 6 versetzt und 5 min mit dem Ultraturax bei 24000U/min gemischt. Man erhielt eine weiße Dispersion mit einem Gehalt von 13,8 Gew.-% IPBC.

### Beispiel 13 (Stabilisierte IPBC Dispersion, D-V)

30 g der Dispersion aus Beispiel 4 wurden mit 10 g Isopar L und 6,59 g des Stabilisators aus Beispiel 6 versetzt und 10 min mit dem Ultraturax bei 24000U/min vermischt. Man erhielt eine weiße Dispersion mit einem Gehalt von 13,6 Gew.-% IPBC. Lagerung der Dispersion bei 40 °C zeigte nach 16 Wochen nur eine geringe cremefarbene Verfärbung und keinen messbaren Wirkstoffabbau.

### Beispiel 14 (Stabilisierte IPBC Dispersion, D-VI)

30 g der Dispersion aus Beispiel 5 wurden mit 20 g Isopar L und 9,43 g des Stabilisators I aus Beispiel 6 versetzt und 10 min mit dem Ultraturax bei 24000U/min gemischt. Man erhielt eine weiße Dispersion mit einem Gehalt von 14,3% IPBC. Lagerung der Dispersion bei 40 °C zeigte nach 4 Wochen nur eine geringe cremefarbene Verfärbung und leichten Wirkstoffabbau auf 13,8 Gew.-% IPBC.

### Beispiel 15 Verwendung der erfindungsgemäßen stabilisierten IPBC-Dispersionen in Bindemittelformulierungen

Die stabilisierten IPBC-Dispersionen aus Beispiel 9, 10, 11, 12, 13 und 14 wurden in einem typischen, Alkyd-basierten Anstrichsystem (Alkydlasur A) in Gegenwart eines Übergangsmetalltrockners (Cobalt) und eines Metalloxidpigmentes (Eisenoxid) eingebracht.

Als Vergleich wird die Alkydlasur A mit reinem IPBC (V-I) oder mit einem nicht erfindungsgemäß stabilisierten IPBC (V-II) gemäß Tabelle 1 versetzt.

| Tabelle 1 - IPBC/Aziridin-Konzentrat (V-II) | |
|---|---|
| IPBC | 30 Gew.-% |
| Crosslinker CX-100** | 15 Gew.-% |
| Rhodiasolv DIB* | 55 Gew.-% |

| | |
|---|---|
| Gemisch bestehend aus Diisobutyladipat, Diisobutylglutarat, Diisobutylsuccinat, Fa. Rhodia. ** Trimethylolpropan-tris[3-(2-methyl-1-aziridinyl)propionat] | |

Die Rezeptur der verwendeten Alkydlasuren ist Tabelle 2 dargestellt.

Zur Bestimmung der Stabilisierung wurde ein beschleunigter Alterungstest durchgeführt. Hierzu wurden die ausgerüsteten Farbsysteme gemäß Tabelle 2 in dicht schließende 200ml-Glasflaschen gefüllt, wobei nur eine minimale Restmenge Luft in dem Gebinde verblieb, und bei 40°C gelagert. Die Ergebnisse sind der Tabelle 3 zu entnehmen.

**Tabelle 2 Zusammensetzungen der Alkydlasuren A-I bis A-VIII, alle Angaben in Gew.-%)**

| **Inhaltsstoffe** | **A-I** | **A-II** | **A-III** | **A-IV** | **A-V*** | **A-VI*** | **A-VII** | **A-VIII** |
|---|---|---|---|---|---|---|---|---|
| Alkydharz Vialkyd VAF 4349, 80 SD 60 (Cytec) | 22,5 | 22,5 | 22,5 | 22,5 | 22,5 | 22,5 | 22,5 | 22,5 |
| Lösungsmittel Texanol (Eastman) | 5,0 | 5,0 | 5,0 | 5,0 | 5,0 | 5,0 | 5,0 | 5,0 |
| Rheologieadditiv BYK E411 (BYK) | 0,4 | 0,4 | 0,4 | 0,4 | 0,4 | 0,4 | 0,4 | 0,4 |
| Shellsol D60 (Shell Chemicals) | 62,98 | 62,50 | 62,50 | 62,73 | 67,1 | 65,47 | 62,29 | 62,70 |
| Pigmentpräparation MK-Solcolor Eisenoxidrot 130M (MK Chemicals) | 4,0 | 4,0 | 4,0 | 4,0 | 4,0 | 4,0 | 4,0 | 4,0 |
| Sikkativ Octa-Soligen^{®} 69 (enthält 6% Cobalt) (Borchers) | 0,3 | 0,3 | 0,3 | 0,3 | 0,3 | 0,3 | 0,3 | 0,3 |
| D-I | 4,82¹⁾ | - | - | - | - | - | - | - |
| D-II | - | 5,30¹⁾ | - | - | - | - | - | - |
| D-III | - | - | 5,30¹⁾ | - | - | - | - | - |
| D-IV | - | - | - | 5,07¹⁾ | - | - | - | - |
| V-I | - | - | - | - | 0,7 | - | - | - |
| V-II | - | - | - | - | - | 2,33¹⁾ | - | - |
| D-V | - | - | - | - | - | - | 5,51¹⁾ | - |
| D-VI | - | - | - | - | - | - | - | 5,10¹⁾ |

| | | | | | | | | |
|---|---|---|---|---|---|---|---|---|
| * zum Vergleich ¹⁾ entspricht jeweils einem Gehalt von 0,7 Gew.-% IPBC, bezogen auf die Lasur | | | | | | | | |

Texanol ist 2,2,4-Trimethyl-1,3-diol-monoisobutyrat
Shellsol D60: ist ein Kohlenwasserstoffgemisch aus n-, iso- und cyclo-Aliphaten mit einem Siedebereich von 193 bis 245 °C
Octasoligen 69 ist hier Cobalt-bis(2-ethylhexanoat)
BYK E411 ist ein Rheologieadditiv auf Basis eines modifizierten Harnstoffes

**Tabelle 3 Stabilität des IPBC in den Alkydlasuren A-I bis A-VIII bei 40°C**

| | **Restgehalt IPBC [%] bezogen auf den Startwert** | | | |
|---|---|---|---|---|
| Alkydlasur | Start | 2 Wochen | 4 Wochen | 8 Wochen |
| A-I | 100 | n.b. | 100 | 100 |
| A-II | 100 | n.b. | 93 | 72 |
| A-III | 100 | n.b. | 95 | 87 |
| A-IV | 100 | n.b. | 100 | 88 |
| A-V* | 100 | 96 | 52 | 0 |
| A-VI* | 100 | 100 | 80 | 0 |
| A-VII | 100 | n.b. | 91,8 | 91,8 |
| A-VIII | 100 | 97,5 | 96,2 | 83,5 |

| | | | | |
|---|---|---|---|---|
| n.b. = Daten nicht bestimmt | | | | |

Gegenüber einer Alkydlasur A-0 wiesen die Alkydlasuren A-I bis A-IV und A-VII und A-VIII keine Verlängerung der Trocknungszeit auf.

Alkydlasur A-0 enthielt:

| | |
|---|---|
| Alkydharz Vialkyd VAF 4349, 80 SD 60 (Cytec) | 22,5 Gew.-% |
| Lösungsmittel Texanol (Eastman) | 5,0 Gew.-% |
| Rheologieadditiv BYK E411 (BYK) | 0,4 Gew.-% |
| Shellsol D60 (Shell Chemicals) | 67,80 Gew.-% |
| Pigmentpräparation MK-Solcolor Eisenoxidrot 130M (MK Chemicals) | 4,0 Gew.-% |
| Sikkativ Octa-Soligen^{®} 69 (enthält 6% Cobalt) (Borchers) | 0,3 Gew.-% |

## Patentansprüche

1. Mittel enthaltend
• Mikrokapseln enthaltend zumindest ein iodhaltiges Biozid
• zumindest ein Stickstoff enthaltendes anorganisches Trägermaterial

2. Mittel nach Anspruch 1 enthaltend weiterhin zumindest ein unpolares Lösungsmittel.

3. Mittel nach Anspruch 1 oder 2, **dadurch gekennzeichnet, dass** die iodhaltigen Biozide ausgewählt sind aus der Gruppe bestehend aus:
Diiodmethyl-p-tolylsulfon, Diiodmethyl-p-chlorphenylsulfon, 3-Brom-2,3-diiod-2-propenylalkohol, 2,3,3-Triiodallylalkohol, 4-Chlor-2-(2-chlor-2-methylpropyl)-5-[(6-iod-3-pyridinyl)methoxy]-3(2H)- pyridazinone, Iodfenfos, 3-Iod-2-propinyl-2,4,5-trichlorphenylether, 3-Iod-2-propinyl-4-chlorphenylformal, N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat und
Verbindungen der Formel (I) 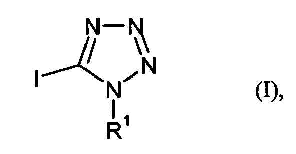
in welcher
R¹ für unsubstituiertes oder substituiertes Alkyl, Alkenyl, Alkinyl oder Phenyl steht.

4. Mittel nach einem der Ansprüche 1 bis 3, **dadurch gekennzeichnet, dass** die iodhaltigen Biozide ausgewählt sind aus der Gruppe bestehend aus 3-Iod-2-propinyl-propyl-carbamat, 3-Iod-2-propinyl-butyl-carbamat, 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester, 3-Brom-2,3-diiod-2-propenylethylcarbamat, 3-Iod-2-propinyl-n-hexylcarbamat und 3-Iod-2-propinyl-cyclohexylcarbamat.

5. Mittel nach einem der Ansprüche 1 bis 4, **dadurch gekennzeichnet, dass** das iodhaltige Biozid 3-Iod-2-propinyl-butyl-carbamat ist,

6. Mittel nach einem der Ansprüche 1 bis 5, **dadurch gekennzeichnet, dass** die Mikrokapseln Kapselmaterialien enthalten die ausgewählt sind aus der Gruppe der Polyharnstoffe, Polyurethane und gemischten Polyharnstoff-polyurethanverbindungen.

7. Mittel nach einem der Ansprüche 1 bis 6, **dadurch gekennzeichnet, dass** die Stickstoff enthaltenden anorganischen Trägermaterialien einen Stickstoffgehalt von 0,05 bis 10 Gew.-%, vorzugsweise von 0,1 bis 10 Gew.-% aufweisen.

8. Mittel nach einem der Ansprüche 1 bis 7, **dadurch gekennzeichnet, dass** die Stickstoff enthaltenden anorganischen Trägermaterialien durch Umsetzung von anorganischen Trägermaterialien mit zumindest einer Stickstoff enthaltenden Verbindung hergestellt wurden.

9. Mittel nach Anspruch 8, **dadurch gekennzeichnet, dass** die Stickstoff enthaltenden Verbindungen aus folgenden ausgewählt sind:
A) Monostickstoffverbindungen der Formel (II)
R²R³ R⁴N (II)
in der
R², R³ und R⁴ jeweils unabhängig voneinander für Wasserstoff, Alkyl, Alkenyl oder Aryl stehen oder paarweise gemeinsam einen 3 bis 7 gliedrigen N-heterocyclischen, aliphatischen, ungesättigten oder aromatischen Ring bilden
wobei die Reste Alkyl, Alkenyl oder Aryl oder die 3 bis 7 gliedrigen N-heterocyclischen, aliphatischen, ungesättigten oder aromatischen Ring entweder nicht, einfach oder mehrfach durch Reste substituiert sind die ausgewählt sind aus der Gruppe Hydroxy, Fluor, Chlor, Brom, Iod, Carboxyl, Alkylsulfonyl, Arylsulfonyl, Nitril oder Isonitril,
wobei jedoch zumindest einer der Reste R², R³ und R⁴ nicht Wasserstoff ist.
B) Polystickstoffverbindungen
C) Aziridine.

10. Mittel nach einem der Ansprüche 1 bis 9, **dadurch gekennzeichnet, dass** sie ein oder mehrere weitere Biozide enthalten die ausgewählt sind aus folgender Gruppe:
Triazole wie:
Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
Ancymidol, Buthiobat, Fenarimol, Mepanipyrin, Nuarimol, Pyroxyfur, Triamirol;
Succinat-Dehydrogenase Inhibitoren wie:
Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
Terbinafin, Naftifin, Butenafin, 3-Chloro-7-(2-aza-2,7,7-trimethyl-oct-3-en-5-in);
Sulfenamide wie:
Dichlofluanid, Tolylfluanid, Folpet, Fluorfolpet; Captan, Captofol;
Benzimidazole wie:
Carbendazim, Benomyl, Fuberidazole, Thiabendazol oder deren Salze;
Morpholinderivate wie:
Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
2-Mercaptobenzothiazol;
Benzthiophendioxide wie:
Benzo[b]thiophen-S,S-dioxid-carbonsäurecyclohexylamid;
Benzamide wie:
2,6-Dichloro-N-(4-trifluoromethylbenzyl)-benzamid, Tecloftalam;
Borverbindungen wie:
Borsäure, Borsäureester, Borax;
Formaldehyd und Formaldehydabspaltende Verbindungen wie:
Benzylalkoholmono-(poly)-hemiformal, 1,3-Bis(hydroxymethyl)-5,5-dimethylimidazolidine-2,4-dione (DMDMH), Bisoxazolidine, n-Butanol-hemiformal, Cis 1-(3-Chlorallyl)-3,5,7-triaza-l-azoniaadamantane chlorid, 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazolidine, Ethylenglycol-hemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie:
N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
Zimtaldehyd, Formaldehyd, Glutardialdehyd, β-Bromzimtaldehyd, o-Phthaldialdehyd;
Thiocyanate wie:
Thiocyanatomethylthiobenzothiazol, Methylenbisthiocyanat;
quartäre Ammoniumverbindungen und Guanidine wie:
Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Phenole wie:
Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Metallseifen wie:
Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
Oxide der Metalle Zinn, Kupfer und Zink wie z.B. Tributylzinnoxid, Cu₂O, CuO, ZnO;
Oxidationsmittel wie:
Wasserstoffperoxid, Peressigsäure, Kalium-persulfat;
Dithiocarbamate wie:
Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
2,4,5,6-Tetrachlorisophthalodinitril, Dinatrium-cyano-dithioimidocarbamat;
Chinoline wie:
8-Hydroxychinolin und deren Cu-Salze;
sonstige Fungizide und Bakterizide wie:
Bethoxazin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)-acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
Ag, Zn oder Cu-haltige Zeolithe allein oder eingeschlossen in polymere Werkstoffe.
Ganz besonders bevorzugt sind Mischungen mit
Azaconazol, Bromuconazol, Cyproconazol, Dichlobutrazol, Diniconazol, Diuron, Hexaconazol, Metaconazol, Penconazol, Propiconazol, Tebuconazol, Dichlofluanid, Tolylfluanid, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methyl-isothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.
Desweiteren werden neben den oben genannten Fungiziden und Bakteriziden auch gut wirksame Mischungen mit anderen Wirkstoffen hergestellt:
Insektizide / Akarizide / Nematizide:
Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben,
Cypophenothrin Clofentezin, Coumaphos, Cyanophos, Cycloprothrin, Cyfluthrin, Cyhalothrin, Cyhexatin, Cypermethrin, Cyromazin,
Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
Eflusilanate, Emamectin, Empenthrin, Endosulfan, EPN, Esfenvalerat, Ethiofencarb, Ethion, Ethofenprox, Etrimphos, Etoxazole, Etobenzanid,
Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
Halofenocid, HCH (CAS RN: 58-89-9), Heptenophos, Hexaflumuron, Hexythiazox, Hydramethylnon, Hydropren,
Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
Kadedrin
Lambda-Cyhalothrin, Lufenuron,
Malathion, Mecarbam, Mervinphos, Mesulfenphos, Metaldehyd, Methacrifos, q Methamidophos, Methidathion, Methiocarb, Methomyl, Metalcarb, Milbemectin,
Monocrotophos, Moxiectin,
Naled, NI 125, Nicotin, Nitenpyram, Noviflumuron,
Omethoat, Oxamyl, Oxydemethon M, Oxydeprofos,
Parathion A, Parathion M, Penfluron, Permethrin, 2-(4-Phenoxyphenoxy)-ethyl-ethyl-carbamat, Phenthoat, Phorat, Phosalon, Phosmet, Phosphamidon, Phoxim, Pirimicarb,
Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
Quinalphos,
Resmethrin, Rotenon,
Salithion, Sebufos, Silafluofen, Spinosad, Spirodiclofen, Spiromesifen, Sulfotep, Sulprofos,
Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
Vamidothion, Xylylcarb, Zetamethrin;
Molluscizide:
Fentinacetat, Metaldehyd, Methiocarb, Niclosamid;
Herbizide und Algizide:
Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
Eglinazin, Endothal, EPTC, Esprocarb, Ethalfluralin, Ethidimuron, Ethofumesat, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
Glyphosate, Glufosinate-ammonium
Haloxyfop, Hexazinon,
Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
Naproanilid, Napropamid, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron
Sethoxydim, Sifuron, Simazine, Simetryn, Sulfosulfuron, Sulfometuron, Sulfentrazone, Sulcotrione, Sulfosate,
Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
Vernolat.

11. Verfahren zur Herstellung von Mikrokapseln enthaltend iodhaltige Biozide, **dadurch gekennzeichnet, dass** man
a) eine Dispersion zumindest eines iodhaltiges Biozides und zumindest eines Alkydharzes in einem unpolaren Lösungsmittel mit einer Emulsion enthaltend ein unpolares Lösungsmittel und zumindest eine Verbindung ausgewählt aus der Gruppe Polyol, Polyamin und Aminoalkohole versetzt,
b) und die gemäß Schritt a) resultierende Mischung in Gegenwart von Katalysator mit zumindest einem Polyisocyanat umsetzt

12. Verfahren nach Anspruch 11, **dadurch gekennzeichnet, dass** die Umsetzung gemäß Schritt a) erfolgt in Gegenwart zumindest eines Tensids erfolgt, wobei bevorzugt die Emulsion zumindest ein Tensid enthält.

13. Technische Materialien ausgerüstet mit den Mitteln gemäß einem der Ansprüche 1 bis 10.

14. Verfahren zum Schützen von technischen Materialien vor Befall, Veränderung oder Zersetzung durch Mikroorganismen durch Behandlung der technischen Materialien mit Mitteln gemäß einem der Ansprüche 1 bis 10.

15. Anstrichmittel enthaltend
• zumindest ein Bindemittel
• Mikrokapseln enthaltend zumindest ein iodhaltiges Biozid
• zumindest ein Stickstoff enthaltendes anorganisches Trägermaterial
• zumindest ein unpolares Lösungsmittel

16. Anstrichmittel nach Anspruch 16, **dadurch gekennzeichnet, dass** sie Farben, Lacke, Lasuren, Grundierungen oder Imprägnierungen sind.

17. Anstrichmittel nach Anspruch 15 oder 16, **dadurch gekennzeichnet, dass** sie zumindest ein Übergangsmetallsikkativ enthalten.
